(19) Europäisches Patentamt / European Patent Office / Office européen des brevets

(11) **EP 4 498 207 A1**

(12) **EUROPEAN PATENT APPLICATION**

(43) Date of publication:
**29.01.2025 Bulletin 2025/05**

(21) Application number: **24187691.1**

(22) Date of filing: **10.07.2024**

(51) International Patent Classification (IPC):
***G06F 1/16*** *(2006.01)* ***G06F 1/3206*** *(2019.01)*
***G06F 1/3287*** *(2019.01)* ***G06F 3/01*** *(2006.01)*

(52) Cooperative Patent Classification (CPC):
**G06F 1/16; G06F 1/1694; G06F 1/3206; G06F 1/3287; G06F 3/017**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.07.2023 US 202318357851**
**04.03.2024 US 202418595004**

(71) Applicant: **STMicroelectronics International N.V.**
**1228 Plan-les-Ouates, Geneva (CH)**

(72) Inventors:
- **RIVOLTA, Stefano Paolo**
  **20832 DESIO (MB) (IT)**
- **ARRIGONI, Piergiorgio**
  **28845 DOMODOSSOLA (VB) (IT)**

(74) Representative: **Studio Torta S.p.A.**
**Via Viotti, 9**
**10121 Torino (IT)**

(54) **SYSTEMS AND METHODS FOR ON-STATIONARY SURFACE DETECTION**

(57) A method includes generating, by a first motion sensor of an electronic device, first sensor data over an acquisition time window, indicative of a first type of movement of the electronic device, and generating first process data by processing the first sensor data to determine whether the electronic device is located on a stationary surface, a semi-stationary surface, or is in motion. The method further includes determining whether the electronic device is in a stable state based on the first process data, the stable state being indicative of whether the electronic device has remained on a stationary surface for a first predefined time. And the method further includes stopping the processing of the first sensor data in response to determining that the electronic device has been in the stable state for a second predefined time.

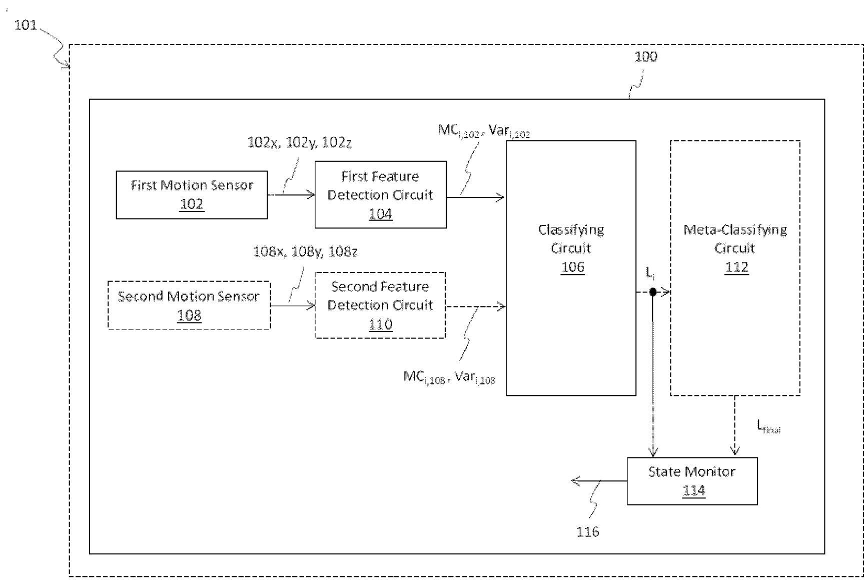


FIG. 1

EP 4 498 207 A1

Processed by Luminess, 75001 PARIS (FR)

## Description

TECHNICAL FIELD

The present invention relates generally to electronic devices, and, in particular embodiments, to a systems and methods for determining whether an electronic device is located on a stationary surface.

BACKGROUND

As electronic devices become more ubiquitous and as individuals become more mobile, there is an increasing need to provide computing capabilities and information on the go. Such a need can be met, at least in part, by laptop computers, tablet devices, and wearable electronics (hereinafter individually and collectively referred to as an "electronic device").

One aspect that users often encounter with the use of an electronic device is high power consumption and/or poor heat dissipation, which often manifests as heating of the electronic device. Power supply components of the electronic device may be located on a bottom surface of the electronic device (e.g., the surface below the keyboard portion of a laptop computer). During long periods of use or during intense use (e.g. during gaming), the base of the electronic device can overheat, burn, or cause discomfort to the user if the electronic device is in physical contact with the user (e.g., the user's lap or wrist).

In addition to the potential of causing harm to human skin, elevated temperatures in the electronic device can detrimentally affect batteries that power the electronic device. While batteries can operate over a wide range of temperatures, charging or discharging the batteries while the electronic device is at an elevated temperature can reduce charge acceptance and reduce battery-life. For example, charging or discharging lithium polymer (LiPo) batteries at elevated temperatures can lead to gas generation that might cause a cylindrical cell to vent and a pouch cell to swell. Even further, elevated temperatures can detrimentally affect the lifetime of integrated circuits (e.g. provided on a printed circuit board (PCB) or implemented as silicon-on-chip (SoC)) in the electronic device, especially when such integrated circuits are subjected to prolonged durations of high operating temperatures.

In the past, heat sinks, fans, or holes could be used to funnel heat out of a body of the electronic device. However, as more functionality is added onto a PCB or into a SoC, heat is becoming a much more important consideration at the silicon level. Efficient ways of detecting whether or not the electronic device is located on a stationary or stable surface (e.g. a table or in a drawer) may be needed to optimize power consumption and/or heat dissipation of components within the electronic device.

An aim of the invention is to overcome the problems of the prior art.

SUMMARY

According to the invention, a method and an electronic device are provided, as defined by the appended claims.

BRIEF DESCRIPTION OF THE DRAWINGS

For a more complete understanding of the present invention, and the advantages thereof, reference is now made to the following descriptions taken in conjunction with the accompanying drawings, in which:

FIG. 1 shows a block diagram of an electronic device including a detection system, in accordance with an embodiment;

FIG. 2 shows a method of extracting orientation-independent features from sensor data generated by a motion sensor of the electronic device of FIG. 1, in accordance with an embodiment;

FIG. 3A shows sensor data generated by a motion sensor of the electronic device of FIG. 1, in accordance with an embodiment;

FIG. 3B shows a zoomed-in view of sampling times of first and second acquisition time windows of the sensor data of FIG. 3A, in accordance with an embodiment;

FIG. 3C shows the norm of the sensor data of FIG. 3A, in accordance with an embodiment;

FIG. 3D shows the norm of the sensor data of FIG. 3A within the first acquisition time window of the sensor data of FIG. 3A, in accordance with an embodiment;

FIGS. 4A and 4B show mean-cross values generated by different motion sensors of the electronic device of FIG. 1 for different states, in accordance with an embodiment;

FIGS. 5A and 5B show relative differences between mean-cross values and variances for different states, in accordance with an embodiment;

FIGS. 6A to 6C show block diagrams illustrating various ways of implementing the detection system of FIG. 1 and the method of FIG. 2, in accordance with various embodiments;

FIGS. 7A to 7B illustrates two different methods to determine the stability of the on-table detection system output in accordance with embodiments;

FIG. 8 shows a block diagram illustrating a method that may be used to put the on-table detection system into a sleep mode when the electronic device has been stable for a configurable amount of time in accordance with an embodiment;

FIG. 9 illustrates a flow chart illustrating a method for operating the on-table detection system in accordance with an embodiment; and

FIG. 10 shows a block diagram of an electronic device including a detection system in accordance with an embodiment.

Corresponding numerals and symbols in the different figures generally refer to corresponding parts unless otherwise indicated. The figures are drawn to clearly illustrate the relevant aspects of the embodiments and are not necessarily drawn to scale.

## DETAILED DESCRIPTION OF ILLUSTRATIVE EMBODIMENTS

Various embodiments described herein are directed to efficient systems and methods for determining whether or not an electronic device is located on a stationary or stable surface (e.g. on a stationary or stable inanimate surface such as on a table or in a drawer). Such a determination may be used, for example, to optimize device performance, vary power consumption of the electronic device, and/or manage heat dissipation of components within the electronic device. As an illustration, in various embodiments, in response to a determination that the electronic device is on a stationary or stable surface (e.g. a table), fan speeds and clock frequencies of electronic components (e.g. of a central processing unit (CPU), a graphics processing unit (GPU), or a power supply unit) in the electronic device may be increased to achieve better performance (e.g. faster computation times); however, in response to a determination that the electronic device is not on a stationary or stable surface (e.g. when the electronic device is in motion or on a user's lap), clock frequencies of components in the electronic device may be decreased to reduce power consumption and to avoid overheating of the components in the electronic device.

At the outset, it is noted that the embodiments described below are directed to systems and methods of determining whether or not the electronic device is located on a stationary or stable surface. Use of the result of such a determination in the electronic device is given merely as illustrations, examples being to implement thermal policies, power savings, and performance benchmarks. The use of the result of such a determination in controlling or varying an operation of the electronic device may, in general, be left to the discretion of the manufacturer(s) of the electronic device and/or the manufacturer(s) of the electronic components of the electronic device.

As described below, the proposed methods use data from one or more motion sensors included in the electronic device. While conventional systems and methods of determining whether or not the electronic device is located on a stationary or stable surface may use data from one or more motion sensors, such conventional systems and methods may suffer from several disadvantages. For example, the motion sensors of the electronic device generate motion sensor data, and conventional systems and methods extract features from the motion sensor data that depend on an orientation of the motion sensor in the electronic device relative to a plurality of reference axes in order to determine whether or not the electronic device is located on a stationary or stable surface. In other words, conventional systems and methods rely on orientation-dependent features for the determination. Illustratively, conventional systems and methods may extract, from the motion sensor data, pitch, yaw, roll and/or various acceleration components relative to a calibrated coordinate system or the plurality of reference axes (e.g. three-dimensional coordinate system or a 6-axes system), with such orientation-dependent features being subsequently used to determine whether or not the electronic device is located on a stationary or stable surface.

Use of such orientation-dependent features requires calibration of the motion sensors of the electronic device to reduce sensor offset and bias (e.g. accelerometer offset and/or gyroscope bias). Calibration is also needed to generate the calibrated coordinate system or the plurality of reference axes, with such calibration ensuring that the orientation-dependent features (e.g., pitch, yaw, roll, x-axis acceleration component, y-axis acceleration component, and/or z-axis acceleration component) accurately track the motion and/or orientation of the electronic device. As a result of the use of orientation-dependent features, conventional systems and methods are not easily reconfigurable or re-tunable, can suffer from high latency and long convergence times (e.g. 10 seconds or more), and have limited accuracy since such conventional systems and methods are susceptible to device-to-device variations and orientation-based variations. Embodiment systems and methods aim to circumvent at least these disadvantages associated with conventional methods of determining whether or not the electronic device is located on a stationary or stable surface.

In general, embodiment systems and methods described herein extract a few (e.g. one or two) significant features from motion sensor data, and such extracted features are orientation-independent. Stated differently, the features extracted from motion sensor data are not dependent on a calibrated coordinate system or a plurality of reference axes for accuracy. In particular, embodiment systems and methods rely on a mean-cross value (explained in greater detail below) and a variance of the norm of the motion sensor data within each acquisition time window, which features are orientation-independent. Furthermore, embodiment systems and methods analyze the mean-cross value and the variance of the norm using a machine learning approach to determine whether or not the electronic device is located on a stationary or stable surface. Additionally, embodiment systems and methods use physical sensor data without the need of complex processing methods (examples of such methods being sensor fusion for attitude estimation, calibration, FFT, and complex filtering chains). Due to the use of orientation-independent features, a machine learning approach, and physical sensor data, the embodiment systems and methods have at least the following advantages: (1) are easily tuned or reconfigured; (2) have low latency and short convergence times (e.g. less than 10 seconds); (3) do not require calibration of the motion sensors (thereby exhibiting immunity against device-to-device variations, accelerometer offsets, and/or gyroscope bias); and (4) have greater reliability compared to conventional systems and methods since orientation-independent features are used instead of orientation-dependent features.

FIG. 1 shows a block diagram of an electronic device 101 including a detection system 100, in accordance with an embodiment. The detection system 100 may be within, attached, or coupled to the electronic device 101. The detection system 100 of the electronic device 101 may be used to determine whether or not the electronic device 101 is on a stationary or stable surface (e.g. on a table or in a drawer). As mentioned above, the electronic device 101 may be a laptop computer, a tablet device, or a wearable electronic device (e.g. a smart watch, mobile phone, wireless headphones, or the like). The detection system 100 includes a first motion sensor 102 and a first feature detection circuit 104 that is coupled to an output of the first motion sensor 102. The first feature detection circuit 104 is configured to determine one or more orientation-independent features from the output signal of the first motion sensor 102.

As shown in FIG. 1, a classifying circuit 106 is coupled to an output of the first feature detection circuit 104. The classifying circuit 106 is configured to determine a state of the electronic device 101 (e.g. assign a label indicating whether or not the electronic device 101 is located on a stationary or stable surface). Such a determination by the classifying circuit 106 is based on the orientation-independent features determined by the first feature detection circuit 104.

In some embodiments, the detection system 100 may further include a second motion sensor 108 that measures a different motion characteristic compared to the first motion sensor 102. In such embodiments, a second feature detection circuit 110 may be coupled to an output of the second motion sensor 108. Similar to the first feature detection circuit 104, the second feature detection circuit 110 is configured to determine one or more orientation-independent features from the output signal of the second motion sensor 108.

In embodiments including the second motion sensor 108, the classifying circuit 106 is configured to determine a state of the electronic device 101 (e.g. assign a label indicating whether or not the electronic device 101 is located on a stationary or stable surface), with such determination being based on the orientation-independent features determined by the first feature detection circuit 104 and the orientation-independent features determined by the second feature detection circuit 110.

In some embodiments, the detection system 100 may further include a meta-classifying circuit 112 coupled to an output of the classifying circuit 106. The meta-classifying circuit 112 may implement a time-based voting method that acts as a low-pass filter on the output of the classifying circuit 106 in order to improve an overall accuracy of the detection system 100. Each of the components of the detection system 100 is described in further detail below.

The detection system 100 includes the first motion sensor 102, which may be an accelerometer of the electronic device 101. It is noted that although only one first motion sensor 102 is shown in FIG. 1, a plurality of first motion sensors 102 may be included in the electronic device 101 (e.g. two or more accelerometers placed at different locations of the electronic device 101). The electronic device 101 having the first motion sensor 102 may be a laptop computer having an accelerometer coupled or attached to a base of the laptop computer. As another example, the electronic device 101 having the first motion sensor 102 may be a tablet having an accelerometer included within the tablet. The first motion sensor 102 may be configured to sense vibration or acceleration of the electronic device 101 in each axis of motion. For example, the first motion sensor 102 may generate first sensor data 102x, 102y, 102z that is indicative of vibration or acceleration of the electronic device 101 in the lateral axis (e.g. referred to as the "x axis"), longitudinal axis (e.g. referred to as the "y axis"), and vertical or normal axis (e.g. referred to as the "z axis"), respectively.

As will be clear in the description below, use of the first sensor data 102x, 102y, 102z from the first motion sensor 102 enables the embodiment system and methods to determine whether or not the electronic device 101 is located on a stationary or stable surface. However, in other embodiments, detection can be improved with the use of the second motion sensor 108 in conjunction with the first motion sensor 102. The second motion sensor 108 may be a gyroscope of the electronic device 101. It is reiterated that use of the second motion sensor 108 (and consequently, the data generated by the second motion sensor 108) is optional. For example, in low-power or low-cost implementations of the embodiment systems and methods, the second motion sensor 108 (e.g. gyroscope) and the data therefrom may not be present or used by the classifying circuit 106 to determine whether or not the electronic device 101 is located on a stationary or stable surface (e.g. on a table or in a drawer). The second motion sensor 108 may be configured to measure a rate at which the electronic device 101 rotates around each axis of motion. For example, the second motion sensor 108 may generate second sensor data 108x, 108y, 108z that is indicative of the rotation rate of the electronic device 101 around the x-axis, the y-axis, and the z-axis, respectively.

It is noted that the first sensor data 102x, 102y, 102z and the second sensor data 108x, 108y, 108z respectively generated by the first motion sensor 102 and the second motion sensor 108 may depend, at least in part, on a placement or orientation of the electronic device 101. As an illustration, the electronic device 101 may be placed in an inclined plane, a flat plane, on a part of the human body (e.g. a lap), or on an inanimate object (e.g. a desk). The first sensor data 102x, 102y, 102z and the second sensor data 108x, 108y, 108z may be indicative of such a placement or orientation of the electronic device 101. Furthermore, while the first feature detection circuit 104 and the second feature detection circuit 110 are shown as separate circuits in FIG. 1, it is noted that in some embodiments, a single detection circuit may implement both the first feature detection circuit 104 and the second feature detection circuit 110.

FIG. 2 shows an embodiment method 200 that may be executed by the first feature detection circuit 104 to extract or determine orientation-independent features from the first sensor data 102x, 102y, 102z. The method 200 may also be executed by the second feature detection circuit 110 to extract or determine orientation-independent features from the second sensor data 108x, 108y, 108z, in other embodiments that optionally utilize the second motion sensor 108 (e.g. gyroscope) in addition to the first motion sensor 102 (e.g. accelerometer). The description that follows is directed to examples where the first feature detection circuit 104 executes the method 200; however, such description applies equally to the second feature detection circuit 110 in other embodiments that optionally utilize the second motion sensor 108 in addition to the first motion sensor 102.

Prior to discussing the details of method 200 in FIG. 2, a brief discussion of acquisition time windows is provided with reference to FIGS. 3A and 3B. FIG. 3A shows an example of the first sensor data 102x, 102y, 102z that is generated by the first motion sensor 102 over a plurality of acquisition time windows. FIG. 3B shows a zoomed-in view of sampling times of the first two acquisition time windows $W_1$, $W_2$ of the example of FIG. 3A. As illustrated in FIG. 3B, the plurality of acquisition time windows are consecutive and non-overlapping windows of time in some embodiments. However, in other embodiments, overlapping windows of time are also possible. In the example of FIG. 3B, the first acquisition time window W1 starts at time $t_0$ and ends at time $t_{49}$. In an embodiment, such as in the examples of FIGS. 3A and 3B, each acquisition time window has a duration of 1 second and includes 50 samples (e.g. corresponding to a 50 Hz sampling frequency). Consequently, in the example of FIG. 3A, there are about 72 acquisition time windows and a total about 3600 samples (i.e., 50 samples for each of the 72 acquisition time windows). It is noted that each sample includes a complete dataset (e.g. x-axis data, y-axis data, and z-axis data). It is also noted that the 50 Hz sampling frequency and the 1 second duration for each acquisition time window are merely examples, and other embodiments are envisioned where different sampling frequencies and different time durations are used. FIG. 3C shows the norm 302 of the first sensor data 102x, 102y, 102z in FIG. 3A, and the norm 302 at a given sample time may be indicative of the magnitude of the first sensor data 102x, 102y, 102z at the given sample time.

The method 200 is executed for each acquisition time window W;. As shown in FIG. 2, method 200 is triggered at the start of acquisition time window $W_i$ (e.g. time $t_o$ in FIG. 3B) and includes step 202, where the first feature detection circuit 104 receives the first sensor data 102x, 102y, 102z and determines the norm of each sample within the acquisition time window $W_i$. In some embodiments, the norm of each sample within the acquisition time window $W_i$ is stored in a buffer included in the first detection circuit 104, although in other embodiments, the computation technique used to determine the norm may obviate the need for such a buffer.

In step 204, the acquisition time window $W_i$ ends and the method 200 proceeds to step 206 where the mean of the norms within the acquisition time window $W_i$ are determined. In steps 208 and 210, statistical data is extracted from the norms within the acquisition time window $W_i$. Consequently, steps 206, 208 and 210 are triggered each time an entire window of samples is acquired (e.g. each time 50 samples are acquired in a 1 second time window). The statistical data includes the mean-cross value within the acquisition time window $W_i$ (in step 208) and the variance of the norms within the acquisition time window $W_i$ (in step 210), both of which require the mean of the norms determined in step 206.

With reference to step 208, the mean-cross value denotes the number of times the norms within the acquisition time window W; crosses the mean of the norms within the acquisition time window W;. An illustration is given in FIG. 3D, which shows the norms 304 within the acquisition time window $W_i$ (e.g. determined in step 202) and the mean 306 of the norms within the acquisition time window $W_i$ (e.g. determined in step 206). In the example of FIG. 3D, there are 26 times when the norms 304 within the acquisition time window W; crosses the mean 306 of the norms within the acquisition time window $W_i$. These instances are depicted as points of intersection of the curve 304 and the line 306. Consequently, the mean-cross value for the example of FIG. 3D is 26.

With reference to step 210, the variance of the norm within the acquisition time window $W_i$ is determined as follows:

$$variance = \frac{\sum_1^n (x_i - x_{mean})^2}{n-1}$$

where n is the number of samples within the acquisition time window $W_i$ (e.g. 50 in the case of a 50 Hz sampling frequency), x; is the $i^{th}$ norm 304 within the acquisition time window $W_i$, and $x_{mean}$ is the mean of the norms 306 within the acquisition time window $W_i$.

At step 212 of method 200, the mean-cross value and the variance of the norms within the acquisition time window $W_i$ is provided to the classifying circuit 106. As such, the classifying circuit 106 is run after the acquisition time window $W_i$ ends and after the mean-cross value and the variance of the norms within the acquisition time window $W_i$ are determined by the appropriate detection circuit. It is once again noted that the mean-cross value and the variance of the norms within the acquisition time window $W_i$ are the orientation-independent features that are used to determine whether or not the electronic device 101 is located on a stationary or stable surface.

FIG. 4A shows mean-cross values 402 generated by the first feature detection circuit 104 and mean-cross values 404 generated by the second feature detection circuit 110 over 96 acquisition time windows $W_i$ in a scenario where the electronic device 101 is located on a stationary or stable surface (e.g. a table). Consequently, each acquisition time windows $W_i$ in FIG. 4A has a respective mean-cross value $MC_{A,i}$ associated with the first motion sensor 102 (e.g. accelerometer) and a respective mean-cross value $MC_{G,i}$ associated with the second motion sensor 108 (e.g., gyroscope). FIG. 4B shows mean-cross values 406 generated by the first feature detection circuit 104 and mean-cross values 408 generated by the second feature detection circuit 110 over 145 acquisition time windows $W_i$ in a scenario where the electronic device 101 is not located on a stationary or stable surface (e.g., when on a human lap). Consequently, each time window $t_i$ in the example of FIG. 4B has a respective mean-cross value $MC_{A,i}$ associated with the first motion sensor 102 (e.g. accelerometer) and a respective mean-cross value $MC_{G,i}$ associated with the second motion sensor 108 (e.g., gyroscope).

As can be observed by comparing the mean-cross values 402 and 406 of FIGS. 4A and 4B, respectively, it has been observed through experiments that the mean-cross values 402 obtained by method 200 when the electronic device 101 is located on a stationary or stable surface (e.g., when on a table) is expected to be greater than the mean-cross values 406 obtained by method 200 when the electronic device 101 is not located on a stationary or stable surface (e.g., when on a human lap). This relative difference in the mean-cross values in the two different states is depicted in FIG. 5A and can be explained in terms of the contribution of white noise of the first motion sensor 102 to the first sensor data 102x, 102y, 102z in the two states, namely: (1) when the electronic device 101 is located on a stationary or stable surface, and (2) when the electronic device 101 is not located on a stationary or stable surface.

For example, the first sensor data 102x, 102y, 102z from the first motion sensor 102 can be approximated as white noise of the first motion sensor 102 added with motion-dependent signals. The white noise of the first motion sensor 102 can be approximated as a signal that causes the first sensor data 102x, 102y, 102z to fluctuate frequently and randomly around its mean value when the motion-dependent signals are stable and slowly varying (e.g., when on a stationary or stable surface). Comparatively, white noise of the first motion sensor 102 has less of a contribution on the first sensor data 102x, 102y, 102z when the motion-dependent signals are dominant (e.g., when not on a stationary or stable surface). As a result, the mean-cross values 402 when the electronic device 101 is located on a stationary or stable surface is expected to be greater than the mean-cross values 406 when the electronic device 101 is not located on a stationary or stable surface.

In a similar manner, it can be observed from FIGS. 4A and 4B that the mean-cross values 404 obtained by method 200 when the electronic device 101 is located on a stationary or stable surface (e.g., when on a table) is greater than the mean-cross values 408 obtained by method 200 when the electronic device 101 is not located on a stationary or stable surface (e.g. when on a human lap). This difference in the mean-cross values for the two difference states can also be explained in terms of the contribution of white noise of the second motion sensor 108 to the second sensor data 108x, 108y, 108z in the two states, as described above.

With regards to the variance of the norm, it has been observed through experiments that the variance of the norms when the electronic device 101 is located on a stationary or stable surface is expected to be smaller than the variance of the norms when the electronic device 101 is not located on a stationary or stable surface. This relative difference in the variance of the norms in the two different states is depicted in FIG. 5B.

Moving on to the classifying circuit 106, as noted above, the classifying circuit 106 is run after the acquisition time window $W_i$ ends and after it has received the mean-cross value and the variance of the norms for the acquisition time window W;. The classifying circuit 106 may be configured to determine whether or not the electronic device 101 is located on a stationary or stable surface during the acquisition time window W; based on at least the mean-cross value and the variance of the norms for each acquisition time window W;. The classifying circuit 106 may be a supervised machine learning classifier implemented using machine learning techniques, examples being logistic regression, naive Bayes classifier, support vector machines, decision trees, boosted trees, random forest, neural networks, nearest neighbor, among others. The classifying circuit 106 is configured to assign a label (or decision) $L_i$ to each

acquisition time window $W_i$, with such label $L_i$ indicating whether or not the electronic device 101 is located on a stationary or stable surface during the acquisition time window $W_i$. The usage of the variance of the norm can increase the accuracy of the classifying circuit 106, with the variance of the norm decreasing if the electronic device 101 is located on a stationary or stable surface, and the variance of the norm increasing if the electronic device 101 is not located on a stationary or stable surface.

It is noted that supervised learning is a machine learning task of learning a function that maps an input to an output based on example input-output pairs. In particular, supervised learning infers a function from labeled training data including a set of training examples. In the supervised machine learning classifier of classifying circuit 106, labeled training data may be obtained by placing the electronic device 101 (including the first motion sensor 102 and, optionally, the second motion sensor 108) on a stationary or stable surface (e.g. a table) and logging the first sensor data 102x, 102y, 102z and the second sensor data 108x, 108y, 108z for various typing intensity levels and different orientations and positions of the electronic device 101 on the stationary or stable surface. The first sensor data 102x, 102y, 102z and the second sensor data 108x, 108y, 108z for these various typing intensity levels and different orientations and positions are known to have been obtained when the electronic device 101 is located on a stationary or stable surface. Consequently, such first sensor data 102x, 102y, 102z and second sensor data 108x, 108y, 108z are then subjected to the method 200 of FIG. 2 to obtain mean-cross values and variance of norms values for various acquisition time windows $W_i$, and such mean-cross values and variance of norms values are subsequently assigned the label indicating that the electronic device 101 is located on a stationary or stable surface.

Similarly, labeled training data may also be obtained by placing the electronic device 101 on a moving or unstable surface (e.g. a human lap) and logging the first sensor data 102x, 102y, 102z and the second sensor data 108x, 108y, 108z for various typing intensity levels and different orientations and positions of the electronic device 101 on the stationary or stable surface. The various first sensor data 102x, 102y, 102z and the various second sensor data 108x, 108y, 108z obtained in such a manner are then subjected to the method 200 of FIG. 2 to obtain mean-cross values and variance of norms values for various acquisition time windows W;, and such mean-cross values and variance of norms values are subsequently assigned the label indicating that the electronic device 101 is not located on a stationary or stable surface.

Latency of the detection system 100 shown in FIG. 1 may depend on at least the latency of the classifying circuit 106, which may be equal to the duration of each of the acquisition time windows $W_i$. In an embodiment where the duration of each acquisition time window $W_i$ is 1 second, the classifying circuit 106 has a latency of 1 second since a label $L_i$ is output from the classifying circuit 106 every second. As will be described below, in embodiments that also include the meta-classifying circuit 112, the latency of the detection system 100 is also affected by the meta-classifier output latency.

To further enhance the accuracy of the determination of whether or not the electronic device 101 is located on a stationary or stable surface, the detection system 100 may include the meta-classifying circuit 112. In an embodiment, the meta-classifying circuit 112 is configured to determine the number of consecutive occurrences of the output $L_i$ of the classifying circuit 106. If the number of consecutive occurrences overcomes a threshold, the output of the meta-classifying circuit 112 (labelled $L_{final}$ in FIG. 1) is changed. Otherwise, the previous state is kept. As such, the meta-classifying circuit 112 can be used to low-pass filter the output of the classifying circuit 106 (e.g. to avoid glitches and spurious false positives).

Use of the meta-classifying circuit 112 introduces latency to the detection system 100, and the latency of the meta-classifying circuit 112 can be configured to be a minimum of N times the duration of an acquisition time window $W_i$. In some embodiments, different minimum latencies may be applicable depending on whether the output of the classifying circuit 106 indicates that the electronic device 101 is located on a stationary or stable surface (e.g. where $N = N_{on_table}$ and the output state $L_{final}$ is changed if the number of consecutive occurrences reaches $N_{on_table}$) or whether the output of the classifying circuit 106 indicates that the electronic device 101 is not located on a station or stable surface (e.g. where $N = N_{not_on_table}$ and the output state $L_{final}$ is changed if the number of consecutive occurrences reaches $N_{not_on_table}$). In some embodiments, $N_{not_on_table}$ can be different from $N_{on_table}$. The output of the meta-classifying circuit 112 is updated according to the meta-classifier logic configuration and the configured meta-classifier output latency. In some embodiments $N_{on_table}$ may be configured to be between 2 and 10, while $N_{not_on_table}$ may be configured to be between 2 and 10.

While use of the meta-classifying circuit 112 may increase an accuracy of the determination of whether or not the electronic device 101 is located on a stationary or stable surface, this increase in accuracy comes at a cost of increased system latency. However, even though latency increases as accuracy increases, the embodiment systems and methods achieve latencies that are less than 10 seconds (e.g. between 4 seconds and 9 seconds), even with the use of the meta-classifying circuit 112.

As discussed above, in low-power or low-cost implementations of the embodiment systems and methods, the second motion sensor 108 (e.g. gyroscope) and the data therefrom may not be used by the classifying circuit 106 to determine whether or not the electronic device 101 is located on a stationary or stable surface (e.g. on a table or in a drawer). In experiments that have been run, it has been noted that approximately 90% accuracy can be achieved if the classifying circuit 106 only uses the mean-cross values $MC_{i,102}$ and the variance of the norms $Var_{i,102}$ obtained from the first sensor data 102x, 102y, 102z. In other words, labels $L_i$ are correctly given to approximately 90% of the acquisition time windows when only the mean-cross values $MC_{i,102}$ and the variance of the norms $Var_{i,102}$, obtained from the first sensor data 102x, 102y, 102z, are used. As such, even in low-power and low-cost implementations of the embodiment systems and methods a high accuracy can be achieved, even without the use of a meta-classifying circuit 112. It has also been noted that when both the mean-cross values $MC_{i,102}$ and the variance of the norms $Var_{i,102}$ (obtained from the first sensor data 102x, 102y, 102z) and the mean-cross values $MC_{i,108}$ and the variance of the norms $Var_{i,108}$ (obtained from the second sensor data 108x, 108y, 108z) are used, approximately 97% accuracy can be achieved even without the use of a meta-classifying circuit 112.

In low-power applications, the choice of which data to extract from the acquisition time window $W_i$ is based on a trade-off between accuracy and power consumption. Generally, the number of features determined by the first feature detection circuit 104 (and the second feature detection circuit 110 in embodiments that use it in conjunction with circuit 104) can be varied. For example, the mean for each axis can be computed, and this may be used to determine the mean-cross value for each axis for each acquisition time window $W_i$. As another example, the energy of the signal received from the motion sensors can be used. However, it is noted that determination of a greater number of features is accompanied by an increase in resources (e.g. memory, execution time, and power).

The output of the meta-classifying circuit 112 may be provided to a state monitor 114, which may adapt the behavior or operation of the electronic device 101. The state monitor 114 may be implemented using a controller and a memory register. The output of the classifying circuit 106 and/or the output of the meta-classifying circuit 112 may be stored in the memory register of the state monitor 114, and the controller of the state monitor 114 may be configured to read the content of the memory register. In response to a determination that the electronic device is on a stationary or stable surface (e.g. a table), the state monitor 114 may generate an interrupt signal 116 that may adapt the behavior or operation of electronic device 101, for example, fan speeds and clock frequencies of electronic components (e.g. of a central processing unit (CPU), a graphics processing unit (GPU), or a power supply unit) in the electronic device 101 may be increased to achieve better performance (e.g. faster computation times). Conversely, in response to a determination that the electronic device is not on a stationary or stable surface (e.g. when the electronic device is in motion or on a user's lap), the interrupt signal 116 may cause the clock frequencies of components in the electronic device 101 to be decreased to reduce power consumption and to avoid overheating of the components in the electronic device 101.

The embodiment systems and methods discussed above can be implemented in various ways. FIG. 6A shows a first example, where the method 200, as well as the classifying circuit and meta-classifying circuit 112, is implemented by a controller 502 (e.g. a microcontroller) that is coupled to a micro-electro-mechanical (MEMS) system-in-package 504. The MEMS system-in-package 504 may implement the first motion sensor 102 and/or the second motion sensor 108. Furthermore, the controller 502 may be included in a system-on-chip (SoC) 506, which is communicatively coupled to the operating system layer 508 of the electronic device 101.

FIG. 6B shows another example, where the method 200, as well as the classifying circuit and meta-classifying circuit 112, is implemented by directly connecting the controller 502 to the operating system layer 508 (e.g. without the SoC 506 of FIG. 6A being an intervening connection).

FIG. 6C shows another example, where the method 200, as well as the classifying circuit and meta-classifying circuit 112, is implemented directly in hardware (e.g. directly on the MEMS system-in-package 504, aided by software embedded in the MEMS system-in-package 504) that is connected to the operating system layer 508. It is noted that current consumption of the implementation shown in FIG. 6A is greater than current consumption of the implementation shown in FIG. 6B, which is, in turn, greater than current consumption of the implementation shown in FIG. 6C.

The embodiment systems and methods have at least the following advantages: (1) are easily tuned or reconfigured (e.g. due to the use of machine learning approach for classifying circuit 106); (2) have low latency and short convergence times (e.g. less than 10 seconds, due to the time interval TI being split into a plurality of short time windows $t_i$, each of which is about 1 second and also configurable/adjustable); (3) do not require calibration of the motion sensors (e.g. due to the use of orientation-independent features of mean-cross values and the variance of the norms, thereby exhibiting immunity against device-to-device variations, accelerometer offsets, and/or gyroscope bias); and (4) have greater reliability compared to conventional systems and methods since orientation-independent features are used in embodiment systems and methods. Furthermore, as mentioned in reference to FIG. 6C, the embodiment systems and methods may be executed directly in hardware, thus enabling ultra-low power implementations of the embodiment systems and methods.

As will be discussed in more detail below, an on-table detection algorithm detects the orientation of an electronic device. Based on information from a motion sensor of the electronic device, the on-table detection algorithm determines whether an electronic device is located on a table, or not on a table. The algorithm can also determine the stability of the electronic device. The stability of the electronic device depends on whether the device has been determined to be in the same orientation for a configurable timeframe. Embodiments may further add a sleep mode to the on-table detection algorithm, which puts the algorithm into a sleep mode after the device has been determined to be in a stable orientation for a configurable timeframe. Implementation of the sleep mode in the on-table detection algorithm may help to reduce power consumption of the electronic device.

In further embodiments, the embodiments discussed above may be applied to implement a sleep mode for the system which determines whether an electronic device is located on a stationary or stable surface (usually called On-Table Detection, OTD). These embodiments use the output from the classifying circuit 106 that classifies data obtained from the first feature detection circuit 104 and outputs what is referred to as an unfiltered output, which is a classification of whether the electronic device is located on a stationary or stable surface (output 2, meaning on-table) or not (output 1, meaning not-on-table). An example of such a classifying circuit was discussed when explaining the embodiment of FIG. 1 and represented by the classifying circuit 106. The unfiltered output of the classifying circuit 106 may then be used in the meta-classifying circuit 112, where two meta-classifier's counters ($count_{NOT-ON-TABLE}$, and $count_{ON-TABLE}$) are used to convert the unfiltered output into what can now be called a filtered output. The first of the meta-classifier's counters $count_{NOT-ON-TABLE}$ represents a count that is incremented by 1 each time the classifying circuit's 106 unfiltered output has returned not-on-table and the second one of the meta-classifier's counters $count_{ON-TABLE}$ represents a count that is incremented by 1 each time the classifying circuit's 106 unfiltered output has returned on-table. The filtered output represents the output classification of the meta-classifying circuit 112 that gives a determination based on the status of the meta-classifiers of three possible values which are 0 (meaning undetermined), 1 (meaning not-on-table), and 2 (meaning on-table). This embodiment may then use the values of the meta-classifier's counters to make a stability condition that depends on how the meta-classifier's counters are handled by the meta-classifying circuit 112. Using the stability condition, this embodiment may enable a timer-based looping mechanism to switch the OTD system from a continuous data streaming mode, to sleep mode, which may change many operating parameters of the OTD system for power consumption benefits. FIGS. 7A-7B will be used along with FIG. 8 to describe in more detail these further embodiments.

FIG. 7A illustrates a stability determination system where an example output (both unfiltered 702 and filtered 708) of the classifying circuit 106 where the meta-classifier's counters 704 and 706 (originating from the meta-classifying circuit 112) may be used to convert an unfiltered output to a filtered output, which may be used to determine the stability of an electronic device in accordance with an embodiment.

FIG. 7A is a depiction of the operation of the classification system when the meta-classifier's counters are operated in a reset mode, where a meta-classifier's counter (e.g., $count_{ON-TABLE}$) is reset to a count of zero once the opposite meta-classifier's counter (e.g., $count_{NOT-ON-TABLE}$) has incremented. In FIG. 7A, unfiltered output 702 is the output from the classifying circuit 106 and represents a classification (1 meaning not-on-table, 2 meaning on-table) plotted in time windows. The unfiltered output is updated each time the first motion sensor's 102 buffer is full (e.g., every 1 second). The meta-classifier's $count_{NOT-ON-TABLE}$ 704 is a counter that is incremented by 1 up to a configurable maximum count (e.g., a maximum value of 6) every time the unfiltered output 702 is a 1 (meaning the classifying circuit 106 determined, based on the unfiltered output, that the electronic device is not-on-table) plotted in time windows. The meta-classifier's $count_{ON-TABLE}$ 706 is a counter that is incremented by 1 up to a configurable maximum count (e.g., a maximum value of 3) every time the unfiltered output 702 is a 2 (meaning the classifying circuit 106 determined, based on the unfiltered output, that the electronic device is on-table) plotted in time windows. The filtered output 708 is the output from the meta-classifying circuit 112 and represents a classification (0 meaning undetermined, 1 meaning not-on-table, 2 meaning on-table) based on the meta-classifier's counters values plotted in time windows (if a meta-classifier's counter has reached its configurable maximum value, the corresponding state determination is returned as the filtered output state). The binary on or off stability condition 710 shows a visual depiction of how the sleep algorithm would keep track of the stability of the OTD output and how the unfiltered and filtered outputs, as well as the meta-classifier's counters, correspond to the associated stability classification. The stability condition is evaluated every time a new unfiltered output is generated (e.g., every 1 second). This stability classification may be used in an algorithm to put the OTD system into a sleep mode, such as is illustrated in FIG 8.

For the meta-classifier's counters reset case, as illustrated in FIG. 7A, the meta-classifying circuit takes the unfiltered output 702 as input and uses the meta-classifier's $count_{NOT-ON-TABLE}$ 704, and $count_{ON-TABLE}$ 706 to return a filtered output 708. This may be accomplished by incrementing the corresponding counter based on the returned unfiltered output 702 (a returned value of 1 for the unfiltered output corresponds to incrementing the $count_{NOT-ON-TABLE}$ 704, and a returned value of 2 for the unfiltered output corresponds to incrementing the $count_{ON-TABLE}$ 706). Should the opposing meta-classifier's counter increment by one, the other meta-classifier's counter is reset to zero in this embodiment.

The filtered output 708 is then determined by taking the returned values of the meta-classifier's counters 704 and 706, where the corresponding value of the filtered output is only changed from a reported value once the corresponding meta-classifier's counter has reached the corresponding maximum value, which is a configurable limit (in the embodiment depicted in FIG. 7A, this value is 6 for the $count_{NOT\text{-}ON\text{-}TABLE}$ 704, and is 3 for the $count_{ON\text{-}TABLE}$ 706). A meta-classifier's counter may not increment beyond its configurable maximum value.

The STABILITY classification 710 may be determined by either counters (704, or 706) attaining their maximum value (or remaining at their maximum value), where the STABILITY classification 710 will remain in the true state so long as one meta-classifier's counter is equal to its maximum value, and the other meta-classifier's counter is zero. The STABILITY classification may be used by a method to determine whether the OTD output has been stable over a timeframe.

FIG. 7B illustrates a stability determination system where an example output (both unfiltered 712 and filtered 718) of the classifying circuit 106 where the meta-classifier's counters 714 and 716 (originating from the meta-classifying circuit 112) may be used to convert an unfiltered output to a filtered output, which may be used to determine the stability of an electronic device in accordance with an embodiment.

FIG. 7B is a depiction of the operation of the classification system when the meta-classifier's counters are operated in a decrement mode, where a meta-classifier's counter (e.g., $count_{ON\text{-}TABLE}$) is decreased by one once the opposite meta-classifier's counter (e.g., $count_{NOT\text{-}ON\text{-}TABLE}$) has incremented by one. In FIG. 7B, unfiltered output 712 is the output from the classifying circuit 106 and represents a classification (1 meaning not-on-table, 2 meaning on-table) plotted in time windows. The unfiltered output is updated each time the first motion sensor's 102 buffer is full (e.g., every 1 second). The meta-classifier's $count_{NOT\text{-}ON\text{-}TABLE}$ 714 is a counter that is incremented by 1 up to a configurable maximum count (e.g., a maximum value of 6) every time the unfiltered output 712 is a 1 (meaning the classifying circuit 106 determined, based on the unfiltered output, that the electronic device is not-on-table) plotted in time windows. The meta-classifier's $count_{ON\text{-}TABLE}$ 716 is a counter that is incremented by 1 up to a configurable maximum count (e.g., a maximum value of 3) every time the unfiltered output 712 is a 2 (meaning the classifying circuit 106 determined, based on the unfiltered output, that the electronic device is on-table) plotted in time windows. The filtered output 718 is the output from the meta-classifying circuit 112 and represents a classification (0 meaning undetermined, 1 meaning not-on-table, 2 meaning on-table) based on the meta-classifier's counters values plotted in time windows (if a meta-classifier's counter has reached its configurable maximum value, the corresponding state determination is returned as the filtered output state). The binary on or off stability condition 720 shows a visual depiction of how the sleep algorithm would keep track of the stability of the OTD output and how the unfiltered and filtered outputs, as well as the meta-classifier's counters, correspond to the associated stability classification. The stability condition is evaluated every time a new unfiltered output is generated (e.g., every 1 second). This stability classification may be used in an algorithm to put the OTD system into a sleep mode, such as is illustrated in FIG 8.

FIG. 7B shows an example output (both unfiltered 712 and filtered 718) of the classifying circuit 106 where the meta-classifier's counters 714 and 716 are used to take the unfiltered output to the filtered output. FIG. 7B is a depiction of how this classification system would work when operated in a decrement mode, where a meta-classifier's counter is decremented by one each time the opposite meta-classifier's counter is incremented by one (the lowest value they can go to is zero). The binary on or off stability condition 720 shows a visual depiction of how the sleep algorithm would keep track of the stability of the OTD output and how the unfiltered and filtered outputs, as well as the meta-classifier's counters, correspond to the associated stability classification. This stability classification may be used in an algorithm to put the OTD system into a sleep mode, such as is depicted in FIG 8.

For the meta-classifier's counters decrement case, as illustrated in FIG. 7B, the meta-classifying circuit takes the unfiltered output 712 as input and uses the meta-classifier's $count_{NOT\text{-}ON\text{-}TABLE}$ 714, and $count_{ON\text{-}TABLE}$ 716 to return a filtered output 718. This may be accomplished by incrementing the corresponding counter based on the returned unfiltered output 712 (a returned value of 1 for the unfiltered output corresponds to incrementing the $count_{NOT\text{-}ON\text{-}TABLE}$ 714, and a returned value of 2 for the unfiltered output corresponds to incrementing the $count_{ON\text{-}TABLE}$ 716). Should the opposing meta-classifier's counter increment by one, the other meta-classifier's counter will decrement by one in this embodiment.

The filtered output 718 is then determined by taking the returned values of the meta-classifier's counters 714 and 716, where the corresponding value of the filtered output is only changed from a reported value once the corresponding meta-classifier's counter has reached the corresponding maximum value, which is a configurable limit (in the embodiment depicted in FIG. 7B, this value is 6 for the $count_{NOT\text{-}ON\text{-}TABLE}$ 714, and is 3 for the $count_{ON\text{-}TABLE}$ 716). A meta-classifier's counter may not increment beyond its configurable maximum value.

The STABILITY classification 720 may be determined by either counters (714, or 716) attaining their maximum value (or remaining at their maximum value), where the STABILITY classification 720 will remain in the true state so long as one meta-classifier's counter is equal to its maximum value, and the other meta-classifier's counter is equal to zero. The STABILITY classification may be used by a method to determine if the OTD output has been stable over a timeframe.

In an embodiment, the stability detection system may be configured to operate according to the exemplary operation flow illustrated in FIG. 8, which may implement a sleep mode in the OTD system to prevent constant reading and processing of the motion sensor's data.

FIG. 8 shows a block diagram illustrating the algorithm used to put the OTD system into a sleep mode when the OTD output has been stable for a configurable amount of time. 802 is a gyroscope that feeds into the OTD step 806. The OTD system also takes the output from accelerometer 804. At 808, the system checks if there is a new OTD output (positive outcome, or there was a new OTD output, moves to step 812) or not (the system will monitor for a new OTD output and remain at block 808).

At a step 812, it may be determined, based on the outcome of the analysis step, which classifies the STABILITY classification, that the electronic device is stable (positive outcome, Y, of block 812), or not (negative outcome, N, of block 812). To determine the STABILITY classification that is checked in step 812, the system uses the two meta-classifier's counters 810 ($count_{NOT\text{-}ON\text{-}TABLE}$, and $count_{ON\text{-}TABLE}$). Embodiments of this determination of the STABILITY classification are depicted in FIGS 7A-7B.

As a result of a negative outcome of step 812, operation may continue with step 816, which may comprise turning the gyroscope 802 on, setting the accelerometer 804 streaming on (which corresponds to the accelerometer continuing to send its data to the OTD system), turning the accelerometer wakeup condition off, setting a $COUNT_{STABILITY}$ counter to zero (this counter counts the number of time windows that the system has been in a true STABILITY classification), and stopping a $STABILITY_{TIMER}$, which is a timer that is only started when the STABILITY classification is true.

As a result of a positive outcome of step 812, operation may continue with step 814, which may comprise turning the gyroscope 802 off, setting the accelerometer 804 streaming off (stopping the accelerometer from sending data to the OTD system), turning the accelerometer wakeup condition on, and incrementing the $COUNT_{STABILITY}$ counter by the TIMEOUT. The wakeup condition 818 of the accelerometer is a configurable threshold (e.g., 20mg) that, when the accelerometer detects a motion event exceeding the configurable threshold, will send a signal to the OTD system to wakeup from a sleep state.

After the operations made during step 814, operation may continue with step 822, where it may be determined whether the $COUNT_{STABILITY}$ counter is equal to a $STABILITY_{TIMEOUT}$ (positive outcome, Y, of block 822) or not (negative outcome, N, of block 822). The $STABILITY_{TIMEOUT}$ is a configurable limit (e.g., 10 seconds) that is used to ensure the system has been in the positive STABILITY classification for a configurable timeframe.

As a result of a negative outcome of step 822, operation may continue with step 820, where the $STABILITY_{TIMER}$ starts with a TIMEOUT. The TIMEOUT is a pre-defined time window (e.g., equal to the OTD time window length, such as 1 second, or variable based on the $COUNT_{STABILITY}$ value). Once set to the TIMEOUT, an elapsed condition 826 is checked on the $STABILITY_{TIMER}$ to see if the timer has elapsed (positive outcome, Y, of block 826), or not (negative outcome of block 826).

As a result of a negative outcome of step 826, operation may continue with step 826, where the system will continue to check if the $STABILITY_{TIMER}$ has elapsed.

As a result of a positive outcome of step 826, operation may continue with step 816, where the configuration changes made during this step were detailed above and will not be repeated here for the sake of brevity.

As a result of a positive outcome of step 822, operation may continue with step 824, where the sleep mode of the OTD system is enabled. Once step 824 is reached and the system has been put in sleep mode, the accelerometer wakeup condition 818 may eventually be used to restart the mechanism (bring the system out of sleep mode).

FIG. 9 is a flow chart illustrating embodiments of the present invention.

In an embodiment, a method includes generating, by a first motion sensor of an electronic device, first sensor data over an acquisition time window (box 910). The method includes generating first process data by processing the first sensor data to determine whether or not the electronic device is located on a stationary surface (box 920). The method includes determining whether or not the electronic device is in a stable state based on the first process data (box 930). The stable state may be indicative of whether the electronic device has remained on a stationary surface or not for a first predefined time. The method includes stopping the processing of the first sensor data in response to determining that the electronic device has been in the stable state for a second predefined time (box 940).

The various boxes described above may be implemented as further described using FIGS. 7-8 above. For example, in an embodiment, box 930 may be implemented as box 822 in FIG. 8 although in general, it may include STABILITY classification (inside box 806), the STABILITY classification check (box 812), and the COUNT stability check (box 822).

The method may further include generating, by a second motion sensor of the electronic device, second sensor data over the acquisition time window, where determining whether or not the electronic device is located on the stationary surface comprises generating second process data by processing the second sensor data; and determining whether or not the electronic device is in a stable state comprises determining based on the first process data and the second process data. The method may further include generating a first control signal to turn off the second motion sensor in response to determining that the electronic device has remained on the stationary surface for a second predefined time. For example, in an embodiment, this may be implemented as box 812 in FIG. 8.

In another embodiment, the detection system may comprise an additional classifying circuit capable of further distinguishing the type of stationary or stable surface the electronic device is located on through a bisection approach. For example, if the electronic device is determined to be steady (located on a stationary or stable surface), the additional classifying circuit may further determine whether the electronic device is located on a semi-stationary surface (such as a user's lap), or whether the electronic device is located on a stationary surface (such as a table). An example embodiment of the detection system capable of further distinguishing the state (or level of motion) of an electronic device is illustrated in FIG. 10 and is described below.

FIG. 10 shows a block diagram of an electronic device 1001 including a detection system 1000 in accordance with an embodiment. The detection system 1000 may be within, attached, or coupled to the electronic device 1001. The detection system 1000 of the electronic device 1001 may be used to determine whether or not the electronic device 1001 is steady or is in motion. Further, the embodiment detection system 1000 of the electronic device 1001 of FIG. 10 may be able to determine, when steady, whether the electronic device 1001 is on a stationary surface, or a semi-stationary surface. The addition of a third classifier enables the detection system 1000 to distinguish between the stationary surface classification and the semi-stationary surface classification.

The inclusion of the third class (on a semi-stationary surface) may further allow the electronic device 1001 to optimize the system policies (for example the fan speeds and the clock frequencies of electronic components described above) depending if the electronic device 1001 is located on a semi-stationary surface or is in motion. To elaborate, a difficulty encountered using a system not able to distinguish whether the electronic device 1001 is on a semi-stationary surface or is in motion to implement the system policies described above is, for example, the fan speeds of the electronic device 101 were increased to dissipate heat while users were walking (or in motion), which can be interpreted as a bad user experience by the final users. In that scenario, because the detection system only distinguishes between being on a stationary surface (on-table) or in motion (not-on-table), the detection system may cause the electronic device to increase fan speeds which increases noise levels and pointlessly increases power consumption. By including a third class, the electronic device 1001 of FIG. 10 may eliminate that difficulty by changing the system policies based on the state in which the electronic device 1001 is determined to be in.

Similar to the electronic device 101 of FIG. 1, the electronic device 1001 of FIG. 10 may be a laptop computer, a tablet device, or a wearable electronic device (e.g. a smart watch, mobile phone, wireless headphones, or the like). The electronic device 1001 of FIG. 10 may be a specific implementation of the electronic device 101 of FIG. 1 described herein. Similarly labeled elements may be as previously described.

As shown in FIG. 10, a first classifying circuit 1006 is coupled to an output of the first feature detection circuit 104 and may be coupled to an output of the additional second feature detection circuit 110. The first classifying circuit 1006 is configured to determine between two states of the electronic device 1001 (e.g. assign a label or class indicating whether the electronic device 1001 is steady or is in motion). Such a determination by the first classifying circuit 1006 is based on the orientation-independent features determined by the first feature detection circuit 104 using a first machine learning classification. In some embodiments including the second feature detection circuit 110, the determination by the first classifying circuit 1006 is based on the orientation-independent features determined by both the first feature detection circuit 104 and the second feature detection circuit 110. Various embodiments of the detection system 1000 may comprise additional feature detection circuits for additional motion sensors.

The first classifying circuit 1006 determines whether the electronic device 1001 is steady, or the electronic device 1001 is in motion using the first machine learning classification. The first classifying circuit 1006 is coupled to a second classifying circuit 1007 and a meta-classifying circuit 1012. If the first classifying circuit 1006 determines the electronic device 1001 is in motion, a classification $L_{a,j}$ is sent directly to the meta-classifying circuit 1012. If the first classifying circuit 1006 determines the electronic device 1001 is steady, a second classification step is performed, which determines whether the electronic device 1001 is on a stationary surface or is on a semi-stationary surface.

In an embodiment, the second classifying circuit 1007 may be configured to be executed only when the first classifying circuit 1006 determined the electronic device 1001 is steady. Based on the orientation-independent features determined from the first feature detection circuit 104 and the second feature detection circuit 110, the second classifying circuit 1007 may be further configured to determine between two states of the electronic device 1001 for classifying the level of motion of the electronic device 1001 (e.g., determining whether the electronic device 1001 is on a stationary surface (on-table), or is on a semi-stationary surface (on-lap)) using a second machine learning classification.

The second classifying circuit 1007 determines whether the electronic device 1001 is located on a stationary surface, or the electronic device 1001 is located on a semi-stationary surface. The determination of whether the electronic device 1001 is in the state of on a stationary surface or is in the state of on a semi-stationary surface may be determined using the second machine learning classification that adaptively distinguishes between various motion levels of the device. For example, the second machine learning classification may determine the classification or label of the electronic device 1001 by monitoring multiple device parameters, such as the orientation-independent features provided by the feature detection circuits. A second classification, $L_{b,j}$ of whether the electronic device 1001 is on a stationary or a semi-stationary surface may then be communicated to the meta-classifying circuit 1012 through the coupling of the second classifying circuit 1007 and the meta-classifying circuit 1012.

In an embodiment, the meta-classifying circuit 1012 may be configured to receive an initial classification, $L_j$, which may be either the $L_{a,j}$ sent from the first classifying circuit 1006, or the $L_{b,j}$ sent from the second classifying circuit 1007. If the first classifying circuit 1006 determined the electronic device 1001 is in motion, $L_j$ is $L_{a,j}$ from the first classifying circuit and $L_j$ is the in motion classification of state. If the first classifying circuit 1006 determined the electronic device 1001 is steady and the second classifying circuit 1007 determined the state of the electronic device 1001 is either on a stationary surface or on a semi-stationary surface, $L_j$ is $L_{b,j}$ from the second classifying circuit 1007 and $L_j$ is either the on a stationary surface or on a semi-stationary surface classification of state.

In various embodiments, the meta-classifying circuit 1012 may perform similar functions as described above for the meta-classifying circuit 112 in FIG. 1. Again, to further enhance the accuracy of the determination of whether or not the electronic device 1001 is located on a stationary surface, a semi-stationary surface, or in motion, the detection system 1000 may include the meta-classifying circuit 1012. In an embodiment, the meta-classifying circuit 1012 is configured to determine the number of consecutive occurrences of the output $L_j$ of the classifying circuits. If the number of consecutive occurrences overcomes a threshold, the output of the meta-classifying circuit 1012 (labelled $L_{final}$ in FIG. 10) is changed. Otherwise, the previous state is kept. As such, the meta-classifying circuit 1012 can be used to low-pass filter the output of the classifying circuits (e.g. to avoid glitches and spurious false positives).

In an embodiment, the classifying and meta-classifying circuits within a box 1020 of FIG. 10 may be implemented through software, where the different circuits correspond to different algorithms implemented in a processor executing instructions stored in a memory device for determining the classification of the electronic device 1001. In other embodiments, the box 1020 may further comprise the feature detection circuits which may also be implemented through software.

In some embodiments, the initial classification $L_j$ may be sent through the coupling of the first classifying circuit 1006 and the second classifying circuit 1007 directly to a state monitor 1014 without comprising the meta-classifying circuit 1012. In an embodiment comprising the meta-classifying circuit 1012, the output $L_{final}$ of the meta-classifying circuit 1012 may be sent to the state monitor 1014. And, as was described above for the state monitor 114 of FIG. 1, the state monitor 1014 may function similarly.

The state monitor 1014 may adapt the behavior or operation of the electronic device 1001 based on the output received (such as L;, or $L_{final}$). The state monitor 1014 may be implemented using a controller and a memory register. The output of the classifying circuits and/or the output of the meta-classifying circuit 1012 may be stored in the memory register of the state monitor 1014, and the controller of the state monitor 1014 may be configured to read the content of the memory register. In response to a determination that the electronic device is on a stationary surface (e.g., a table), is on a semi-stationary surface (e.g., a user's lap), or is in motion (e.g., the user is walking), the state monitor 1014 may generate an interrupt signal 1016 that may adapt the behavior or operation of electronic device 1001. For example, in response to a determination that the electronic device is on a stationary surface (e.g., on a table), the interrupt signal 1016 may cause the clock frequencies of electronic components (e.g. of a central processing unit (CPU), a graphics processing unit (GPU), or a power supply unit) in the electronic device 1001 to be increased to achieve better performance (e.g. faster computation times); in response to a determination that the electronic device is on a semi-stationary surface (e.g., a user's lap), the interrupt signal 1016 may cause the power (or RF power) of the RF antennas of the electronic device 1001 to be reduced to address electromagnetic radiation requirements; in response to a determination that the electronic device is in motion (e.g. when the electronic device is in motion), the interrupt signal 1016 may cause the fans speed in the electronic device 1001 to be increased to avoid overheating of the components in the electronic device 1001. In various embodiments, the interrupt signal 1016 may request components of the electronic device 1001 to generate a control signal which may be used to change a clock frequency of processors of the electronic device, or the fans speed, or other power settings (such as an RF power).

The inclusion of the third class (on a semi-stationary surface) ameliorates the difficulty described above which caused electronic devices to enable a system policy which is not always optimized for every scenario. Further, the inclusion of the third class may enable other embodiments to further control how system policies are implemented in the electronic device 1001 by enabling a third setting of system policies for the device. For example, fan speeds may be configured at a higher level in the semi-stationary surface state as opposed to the on a stationary surface state. As another example, for various health reasons, electromagnetic radiation emission (such as an RF power through RF antennas (not shown) of the electronic device 1001) may be reduced when the electronic device 1001 is determined to be on a semi-stationary surface (such as on a user's lap) to limit exposure to the user. The embodiment described using FIG. 10 may also further improve the user experience using the electronic device 1001.

In various embodiments, the first machine learning classification and the second machine learning classification may comprise any of or a mixture of conventional machine learning classifications, such as a logistic regression classification, a naive Bayes classification, a support vector machine classification, a decision tree classification, a boosted tree classification, a random forest classification, a neural network classification, or a nearest neighbor classification.

In an additional embodiment, the detection system 1000 may be configured to distinguish between the three classes without comprising the second classifying circuit 1007. Instead, the first classifying circuit 1006 may be trained to distinguish between the three classes (stationary surface, semi-stationary surface, and in motion) and therefore implemented using the hardware described in FIG. 1 above. Although, it has been demonstrated that this embodiment is not capable of attaining the same accuracy achievable by the dual classifying circuit embodiments described above even by allocating the same resources (classifier type, memory, computational power, etc.) to the single classifier circuit which are allocated to the dual classifying circuit.

In various embodiments, the electronic device 1001 may also implement the sleep mode described above and may perform the same functions as the electronic device 100 of FIG. 1. For example, in an embodiment, the electronic device 1001 may also implement the sleep mode described above by having the sleep mode treat either of the on a stationary surface classification and the on a semi-stationary surface classification the same as the on-table classification of the sleep mode. Further embodiments may also comprise additional motion sensors and additional feature detection circuits.

Example embodiments of the invention are described below.

Example 1. A method includes generating, by a first motion sensor of an electronic device, first sensor data over an acquisition time window, and generating first process data by processing the first sensor data to determine whether the electronic device is located on a stationary surface, a semi-stationary surface, or is in motion. The method further includes determining whether the electronic device is in a stable state based on the first process data, the stable state being indicative of whether the electronic device has remained on a stationary surface for a first predefined time. And the method further includes stopping the processing of the first sensor data in response to determining that the electronic device has been in the stable state for a second predefined time.

Example 2. The method of example 1, further includes in response to determining that the electronic device has been in the stable state for the second predefined time, generating, by the first motion sensor, additional first sensor data over subsequent acquisition time windows.

Example 3. The method of one of examples 1 or 2, further includes in response to determining that the additional first sensor data exceeds a predefined threshold, generating the first process data by processing the additional first sensor data to determine whether the electronic device is located on the stationary surface.

Example 4. The method of one of examples 1 to 3, further includes generating, by a second motion sensor of the electronic device, second sensor data over the acquisition time window. Where determining whether the electronic device is located on the stationary surface includes generating second process data by processing the second sensor data, and determining whether the electronic device is in the stable state includes determining based on the first process data and the second process data.

Example 5. The method of one of examples 1 to 4, where the first motion sensor includes an accelerometer and the second motion sensor includes a gyroscope.

Example 6. The method of one of examples 1 to 5, further includes in response to determining that the electronic device has remained on the stationary surface for the second predefined time, generating a first control signal to turn off the second motion sensor.

Example 7. The method of one of examples 1 to 6, where the first predefined time is greater than the second predefined time.

Example 8. The method of one of examples 1 to 7, further includes in response to determining that additional first sensor data exceeds a predefined threshold, generating a second control signal to turn on the second motion sensor. The method further includes turning on the second motion sensor in response to receiving the second control signal, and generating, by the second motion sensor, additional second sensor data over subsequent acquisition time windows. And the method further includes generating the second process data by processing the additional second sensor data.

Example 9. An electronic device includes a first motion sensor configured to generate first sensor data indicative of a first type of movement of the electronic device, and a processor coupled to a memory storing instructions to be executed in the processor. The instructions when executed cause the processor to generate, using the first motion sensor, the first sensor data over an acquisition time window, and generate first process data by processing the first sensor data to determine whether the electronic device is located on a stationary surface. The instructions when executed further cause the processor to determine whether the electronic device is in a stable state based on the first process data, the stable state being indicative of whether the electronic device has remained on a stationary surface or not for a first predefined time, and stop the processing of the first sensor data in response to determining that the electronic device has been in the stable state for a second predefined time.

Example 10. The device of example 9, further includes a first feature detection circuit configured to determine at least one first orientation-independent feature based on the first sensor data, where the at least one first orientation-independent feature includes a mean-cross value associated with an acquisition time window. The device further includes a first classifying circuit configured to determine whether the electronic device is steady or is in motion based on the at least one first orientation-independent feature. And the device further includes a second classifying circuit configured to, in response to the first classifying circuit determining the electronic device is steady, determine whether the electronic device is on a stationary surface or a semi-stationary surface based on the at least one first orientation-independent feature.

Example 11. The device of one of examples 9 or 10, further includes a state monitor configured to in response to determining the electronic device is on a semi-stationary surface, generate a control signal to increase a fan speed of the electronic device, and to decrease an RF power of the electronic device. The state monitor is further configured to in response to determining the electronic device is on a stationary surface, generate a control signal to increase a clock frequency of the electronic device, and to decrease the fan speed of the electronic device, and to increase the RF power of the electronic device. And the state monitor is further configured to in response to determining the electronic device is in motion, generate a control signal to decrease the clock frequency of the electronic device, and to decrease the fan speed of the electronic device.

Example 12. The device of one of examples 9 to 11, further includes a second motion sensor configured to generate second sensor data indicative of the first type of movement of the electronic device, and a second feature detection circuit configured to determine at least one second orientation-independent feature based on the second sensor data, where the at least one second orientation-independent feature includes a mean-cross value associated with the acquisition time window.

Example 13. The device of one of examples 9 to 12, where determining whether the electronic device is steady or is in motion is based on the at least one first orientation-independent feature and the at least one second orientation-independent feature.

Example 14. The device of one of examples 9 to 13, where the instructions when executed further cause the processor to in response to determining that the electronic device has been in the stable state for the second predefined time, generate, by the first motion sensor, additional first sensor data over subsequent acquisition time windows.

Example 15. The device of one of examples 9 to 14, where the instructions when executed further cause the processor to in response to determining that the additional first sensor data exceeds a predefined threshold, generate the first process data by processing the additional first sensor data to determine whether the electronic device is located on the stationary surface.

Example 16. The device of one of examples 9 to 15, where the instructions when executed further cause the processor to generate, using a second motion sensor of the electronic device, second sensor data over the acquisition time window. Where instructions to determine whether the electronic device is located on the stationary surface includes instructions to generate second process data by processing the second sensor data. And where to determine whether the electronic device is in the stable state includes determining based on the first process data and the second process data.

Example 17. The device of one of examples 9 to 16, where the first motion sensor includes an accelerometer and the second motion sensor includes a gyroscope.

Example 18. The device of one of examples 9 to 17, where the instructions when executed further cause the processor to in response to determining that the electronic device has remained on the stationary surface for the second predefined time, generate a first control signal to turn off the second motion sensor.

Example 19. The device of one of examples 9 to 18, where the first predefined time is greater than the second predefined time.

Example 20. The device of one of examples 9 to 19, where the instructions when executed further cause the processor to in response to determining that additional first sensor data exceeds a predefined threshold, generate a second control signal to turn on the second motion sensor. The instructions when executed further cause the processor to turn on the second motion sensor in response to receiving the second control signal, and generate, by the second motion sensor, additional second sensor data over subsequent acquisition time windows. And the instructions when executed further cause the processor to generate the second process data by processing the additional second sensor data.

Those of skill in the art will further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The devices and processing systems described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system.

The various illustrative logical blocks, modules, and circuits described in connection with the embodiments disclosed herein may be implemented or performed with a processor, a digital signal processor (DSP), an Application Specific Integrated Circuit (ASIC), a field programmable gate array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer-readable medium known in the art. An exemplary storage medium is coupled to the processor such that the processor can read information from, and write information to, the storage medium. In the alternative, the storage medium may be integral to the processor. The processor and the storage medium may reside in an ASIC.

From what has been described and illustrated previously, the advantages of the present invention are evident.

Finally, it is clear that modifications and variations may be made to what has been described and illustrated herein, without thereby departing from the scope of the present invention, as defined in the annexed claims. For example, the different embodiments described can be combined with each other to provide further solutions.

## Claims

**1.** A method comprising:

generating (910), by a first motion sensor (102) of an electronic device (101; 1001), first sensor data (102x, 102y, 102z) over an acquisition time window, indicative of a first type of movement of the electronic device;

generating (920) first process data by processing the first sensor data to determine whether the electronic device is located on a stationary surface, a semi-stationary surface, or is in motion;

determining (930) whether the electronic device is in a stable state based on the first process data, the stable state being indicative of whether the electronic device has remained on a stationary surface for a first predefined time; and

stopping (940) the processing of the first sensor data in response to determining that the electronic device has been in the stable state for a second predefined time.

**2.** The method of claim 1, further comprising: in response to determining that the electronic device has been in the stable state for the second predefined time, generating, by the first motion sensor, additional first sensor data over subsequent acquisition time windows.

**3.** The method of claim 2, further comprising: in response to determining that the additional first sensor data exceeds a predefined threshold, generating the first process data by processing the additional first sensor data to determine whether the electronic device is located on the stationary surface.

**4.** The method of anyone of the previous claims, further comprising:

generating, by a second motion sensor (108) of the electronic device, second sensor data (108x, 108y, 108z) over the acquisition time window;

wherein determining whether the electronic device is located on the stationary surface comprises generating second process data by processing the second sensor data; and

determining whether the electronic device is in the stable state comprises determining based on the first process data and the second process data.

**5.** The method of claim 4, further comprising: in response to determining that the electronic device has remained on the stationary surface for the second predefined time, generating a first control signal to turn off the second motion sensor.

**6.** The method of claim 4 or 5, wherein the first predefined time is greater than the second predefined time.

**7.** The method of claim 5, further comprising:

in response to determining that additional first sensor data exceeds a predefined threshold, generating a second control signal to turn on the second motion sensor;
turning on the second motion sensor in response to receiving the second control signal;
generating, by the second motion sensor, additional second sensor data over subsequent acquisition time windows; and
generating the second process data by processing the additional second sensor data.

**8.** An electronic device (100; 1001) comprising:

a first motion sensor (102) configured to generate first sensor data (102x, 102y, 102z) indicative of a first type of movement of the electronic device;
a processor coupled to a memory storing instructions to be executed in the processor, the instructions when executed cause the processor to:

generate (910), using the first motion sensor, the first sensor data over an acquisition time window;
generate (920) first process data by processing the first sensor data to determine whether the electronic device is located on a stationary surface, a semi-stationary surface, or is in motion;
determine (930) whether the electronic device is in a stable state based on the first process data, the stable state being indicative of whether the electronic device has remained on a stationary surface or not for a first predefined time; and
stop (940) the processing of the first sensor data in response to determining that the electronic device has been in the stable state for a second predefined time.

**9.** The device of claim 8, further comprising:

a first feature detection circuit (104) configured to determine at least one first orientation-independent feature based on the first sensor data, wherein the at least one first orientation-independent feature comprises a mean-cross value associated with an acquisition time window;
a first classifying circuit (1006) configured to determine whether the electronic device is steady or is in motion based on the at least one first orientation-independent feature; and
a second classifying circuit (1007) configured to, in response to the first classifying circuit determining the electronic device is steady, determine whether the electronic device is on a stationary surface or a semi-stationary surface based on the at least one first orientation-independent feature.

**10.** The device of claim 9, further comprising:
a state monitor (1014) configured to:

in response to determining the electronic device is on a semi-stationary surface, generate a control signal to increase a fan speed of the electronic device, and to decrease an RF power of the electronic device,
in response to determining the electronic device is on a stationary surface, generate a control signal to increase a clock frequency of the electronic device, and to decrease the fan speed of the electronic device, and to increase the RF power of the electronic device, and
in response to determining the electronic device is in motion, generate a control signal to decrease the clock frequency of the electronic device, and to decrease the fan speed of the electronic device.

**11.** The device of claim 9 or 10, further comprising:

a second motion sensor (108) configured to generate second sensor data (108x, 108y, 108z) indicative of the first type of movement of the electronic device; and
a second feature detection circuit (110) configured to determine at least one second orientation-independent feature based on the second sensor data, wherein the at least one second orientation-independent feature comprises a mean-cross value associated with the acquisition time window.

**12.** The device of claim 11, wherein determining whether the electronic device is steady or is in motion is based on the at least one first orientation-independent feature and the at least one second orientation-independent feature.

**13.** The device of anyone of claims 8-12, wherein the instructions when executed further cause the processor to:

generate, using a second motion sensor (108) of the electronic device, second sensor data (108x, 108y, 108z) over the acquisition time window;
wherein instructions to determine whether the electronic device is located on the stationary surface comprises instructions to generate second process data by processing the second sensor data; and
determine whether the electronic device is in the stable state comprises determining based on the first process data and the second process data.

**14.** The device of anyone of claims 8-13, wherein the first motion sensor comprises an accelerometer and the second motion sensor comprises a gyroscope.

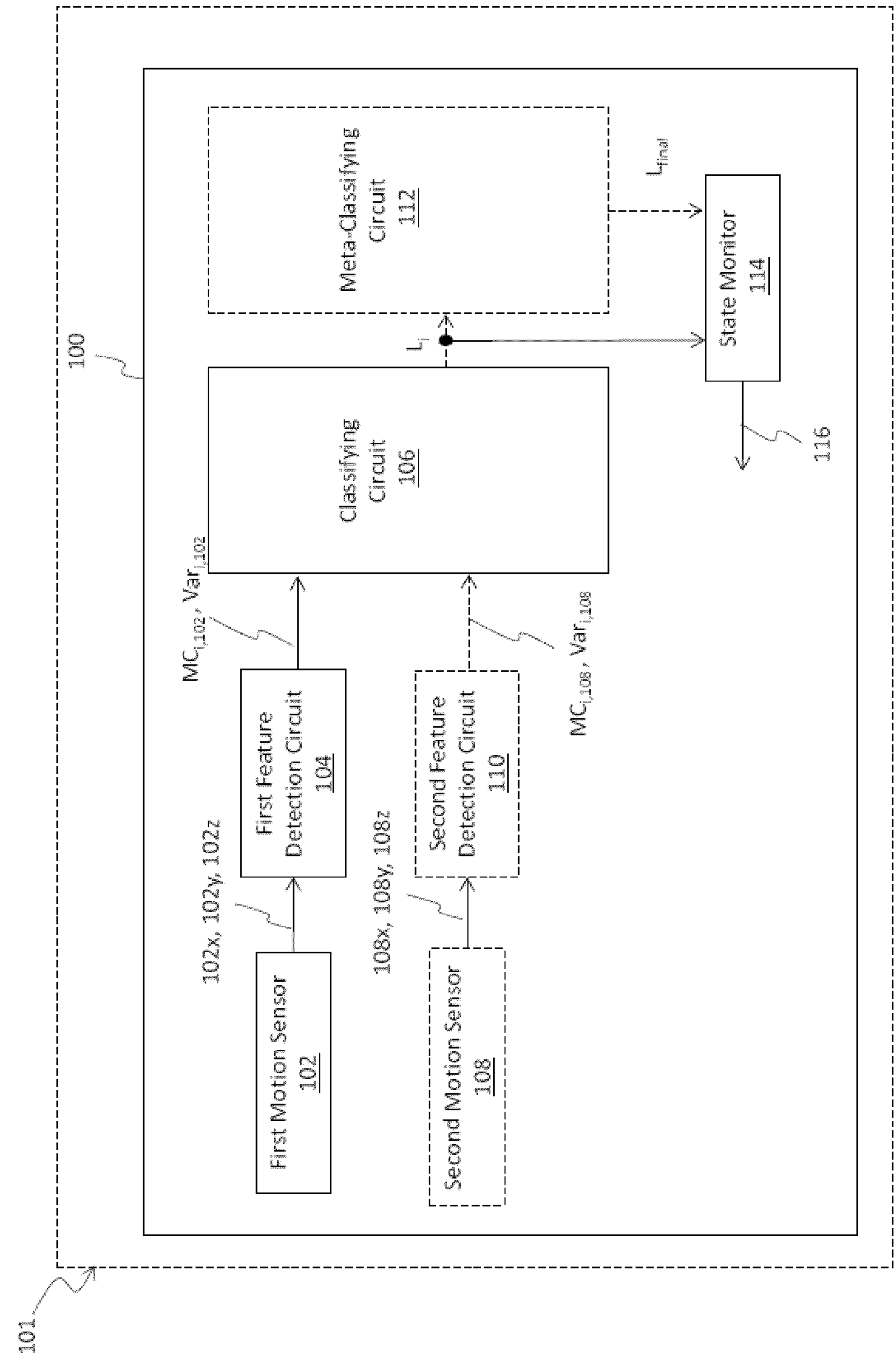
100
101
First Motion Sensor 102
102x, 102y, 102z
First Feature Detection Circuit 104
$MC_{i,102}$, $Var_{i,102}$
Second Motion Sensor 108
108x, 108y, 108z
Second Feature Detection Circuit 110
$MC_{i,108}$, $Var_{i,108}$
Classifying Circuit 106
$L_i$
Meta-Classifying Circuit 112
$L_{final}$
State Monitor 114
116

FIG. 1

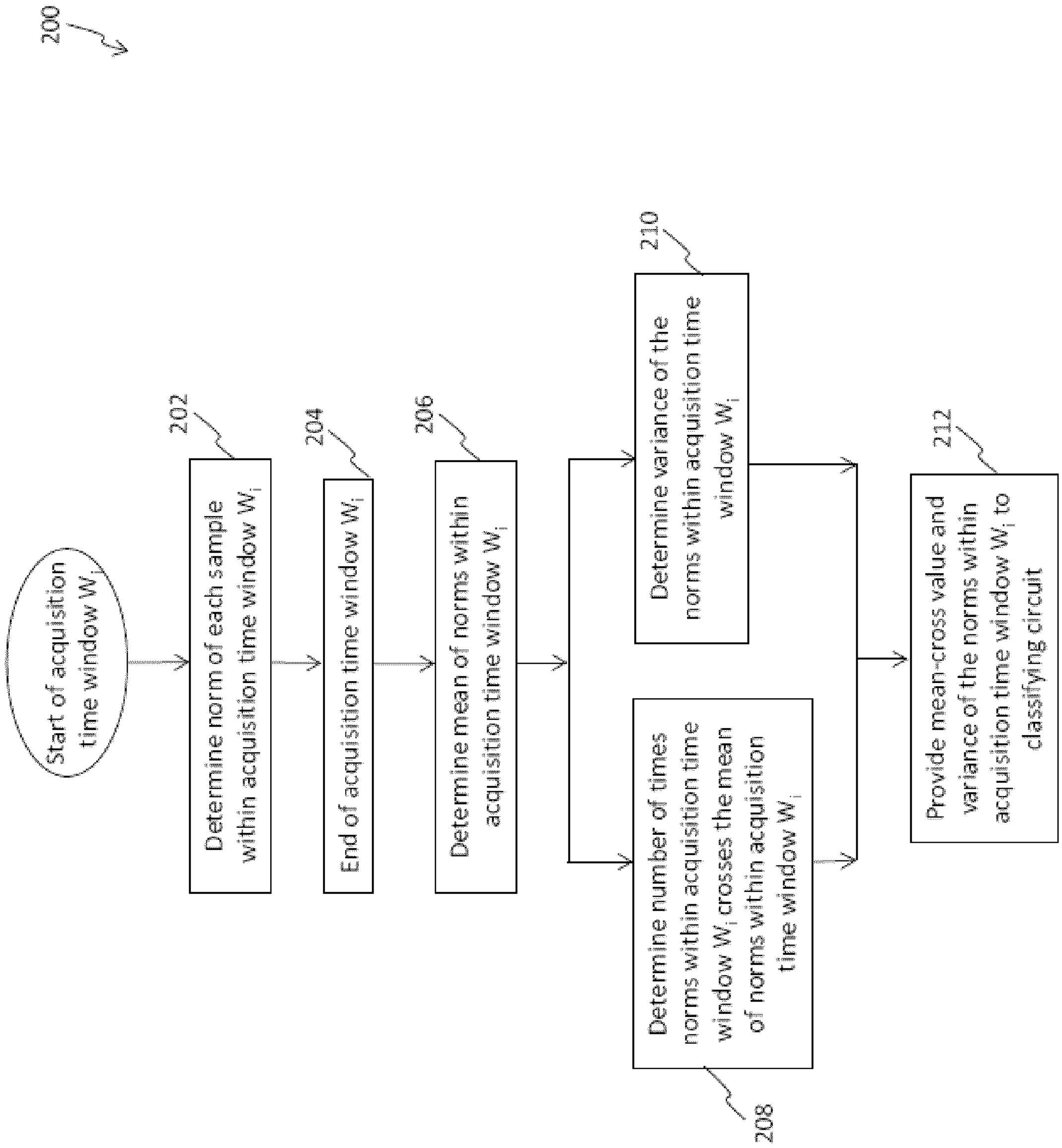
200
Start of acquisition time window $W_i$
202
Determine norm of each sample within acquisition time window $W_i$
204
End of acquisition time window $W_i$
206
Determine mean of norms within acquisition time window $W_i$
208
Determine number of times norms within acquisition time window $W_i$ crosses the mean of norms within acquisition time window $W_i$
210
Determine variance of the norms within acquisition time window $W_i$
212
Provide mean-cross value and variance of the norms within acquisition time window $W_i$ to classifying circuit

FIG. 2

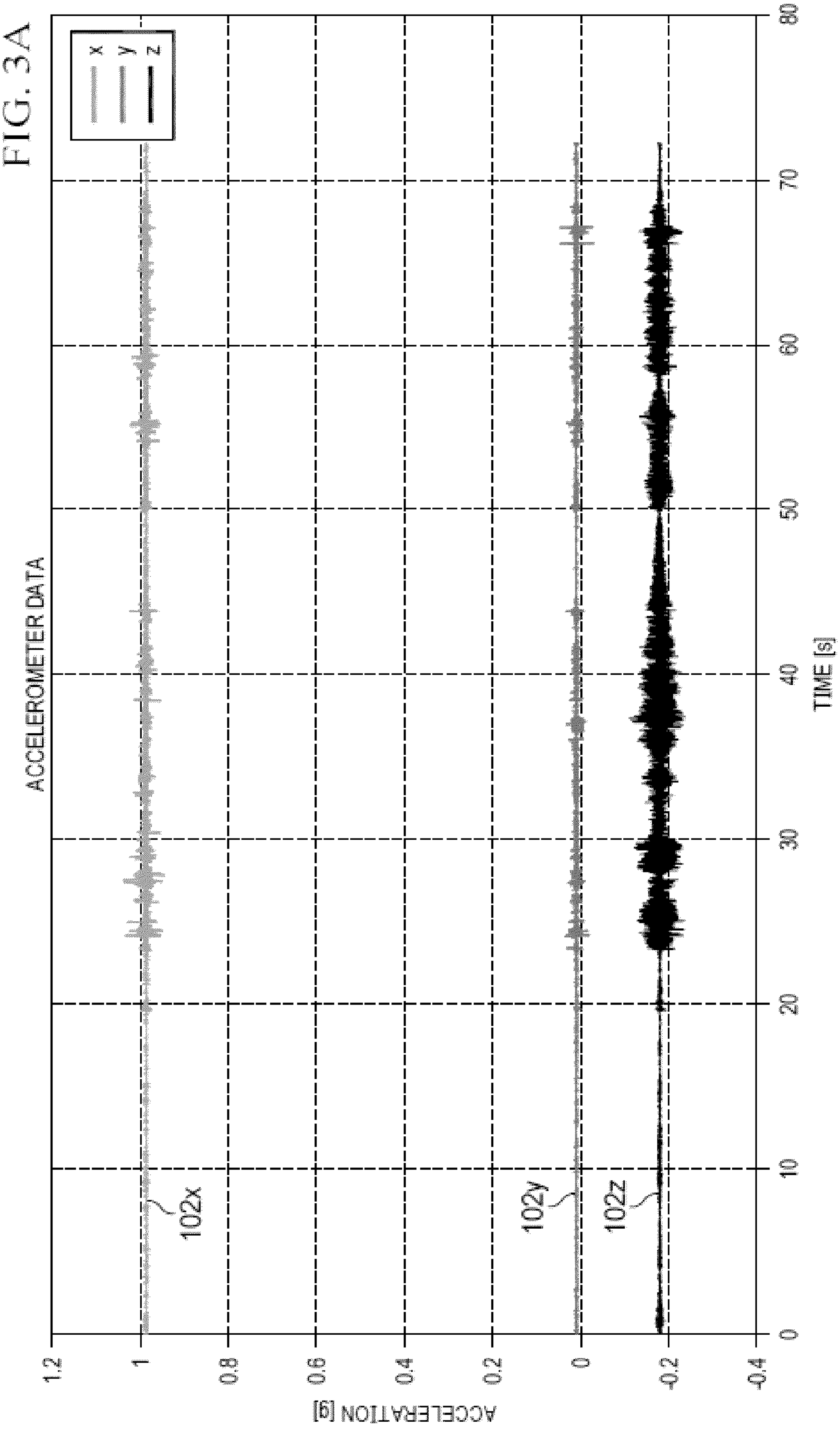
ACCELEROMETER DATA
x
y
z
102x
102y
102z
ACCELERATION [g]
1.2
1
0.8
0.6
0.4
0.2
0
-0.2
-0.4
TIME [s]
0
10
20
30
40
50
60
70
80

FIG. 3A

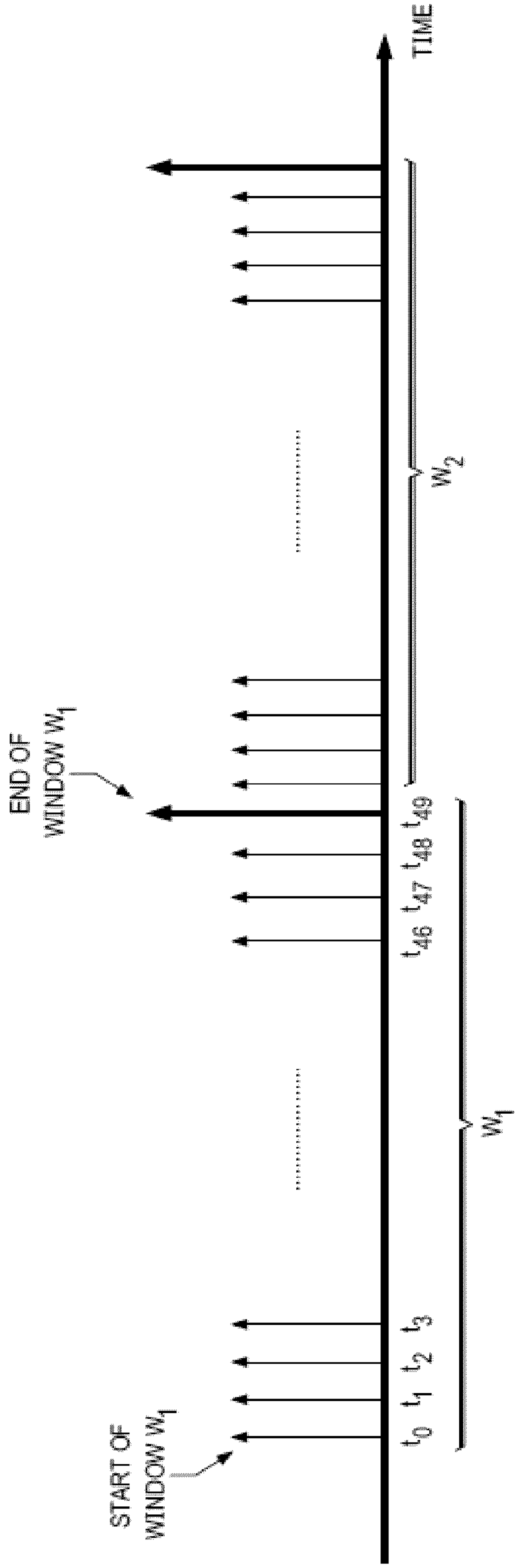
TIME
$W_2$
END OF WINDOW $W_1$
$t_{46}$ $t_{47}$ $t_{48}$ $t_{49}$
$W_1$
$t_0$ $t_1$ $t_2$ $t_3$
START OF WINDOW $W_1$

FIG. 3B

FIG. 3C

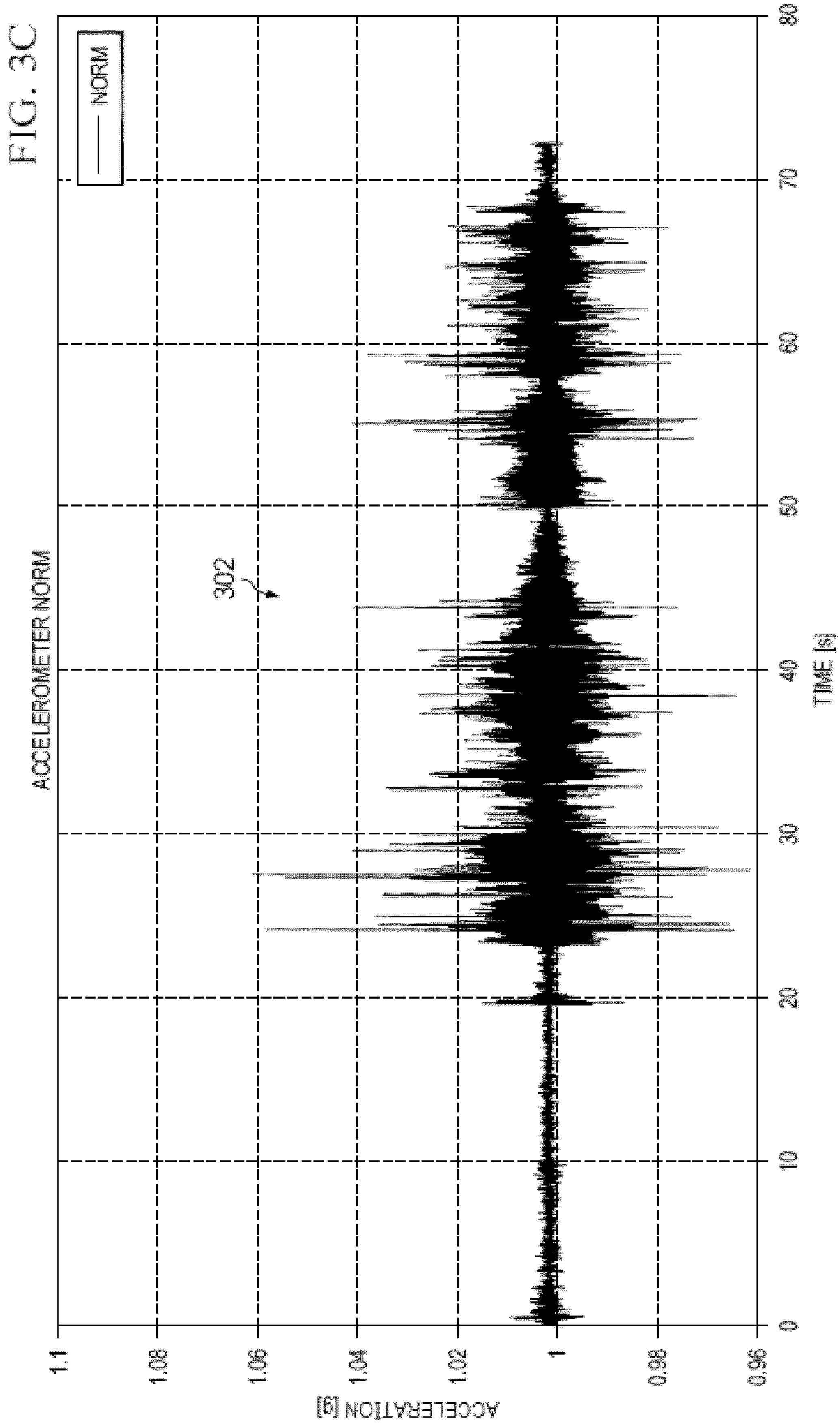
ACCELEROMETER NORM
NORM
302
ACCELERATION [g]
1.1
1.08
1.06
1.04
1.02
1
0.98
0.96
TIME [s]
0
10
20
30
40
50
60
70
80

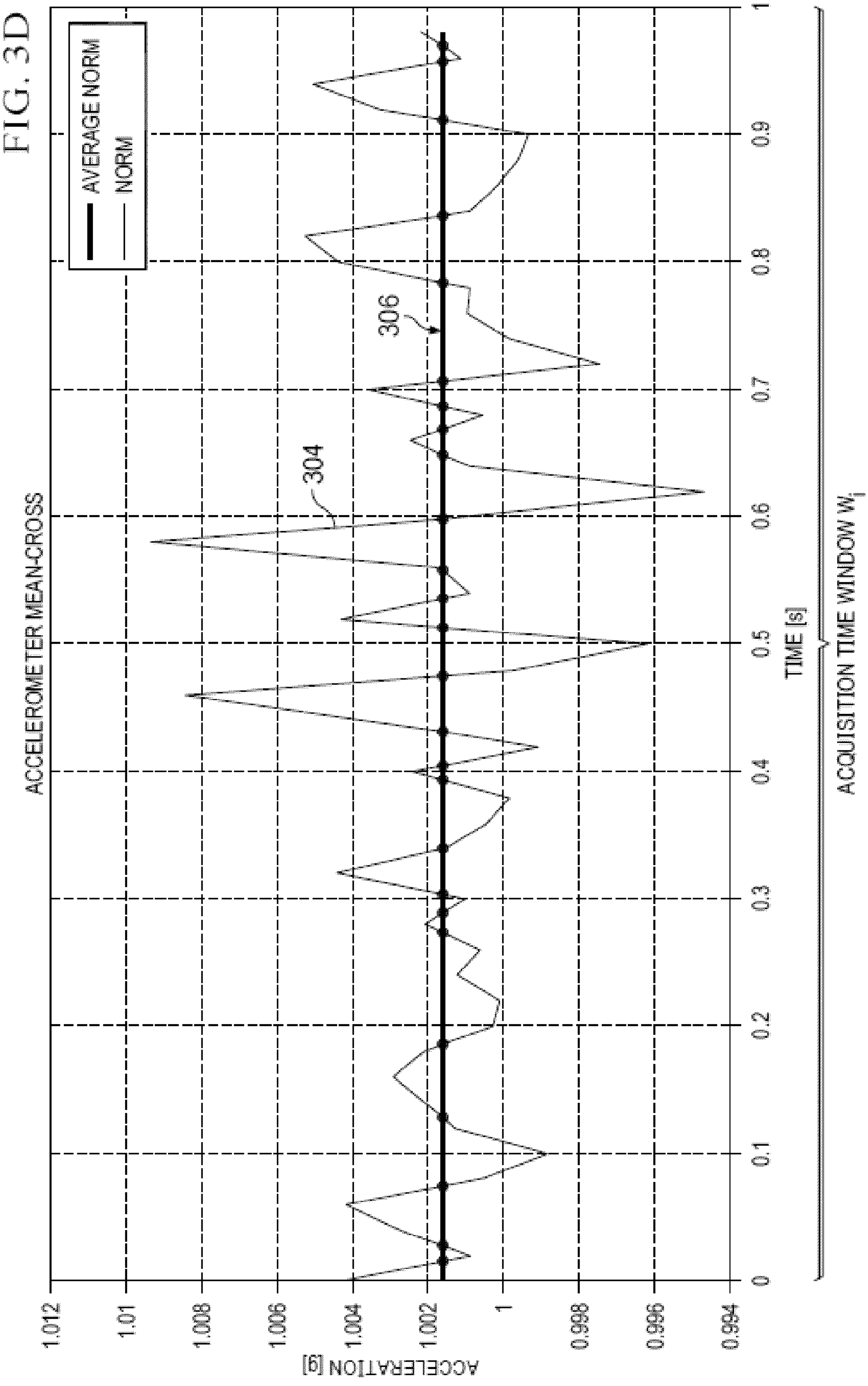
ACCELEROMETER MEAN-CROSS
AVERAGE NORM
NORM
304
306
ACCELERATION [g]
1.012
1.01
1.008
1.006
1.004
1.002
1
0.998
0.996
0.994
0
0.1
0.2
0.3
0.4
0.5
0.6
0.7
0.8
0.9
1
TIME [s]
ACQUISITION TIME WINDOW W<sub>i</sub>

FIG. 3D

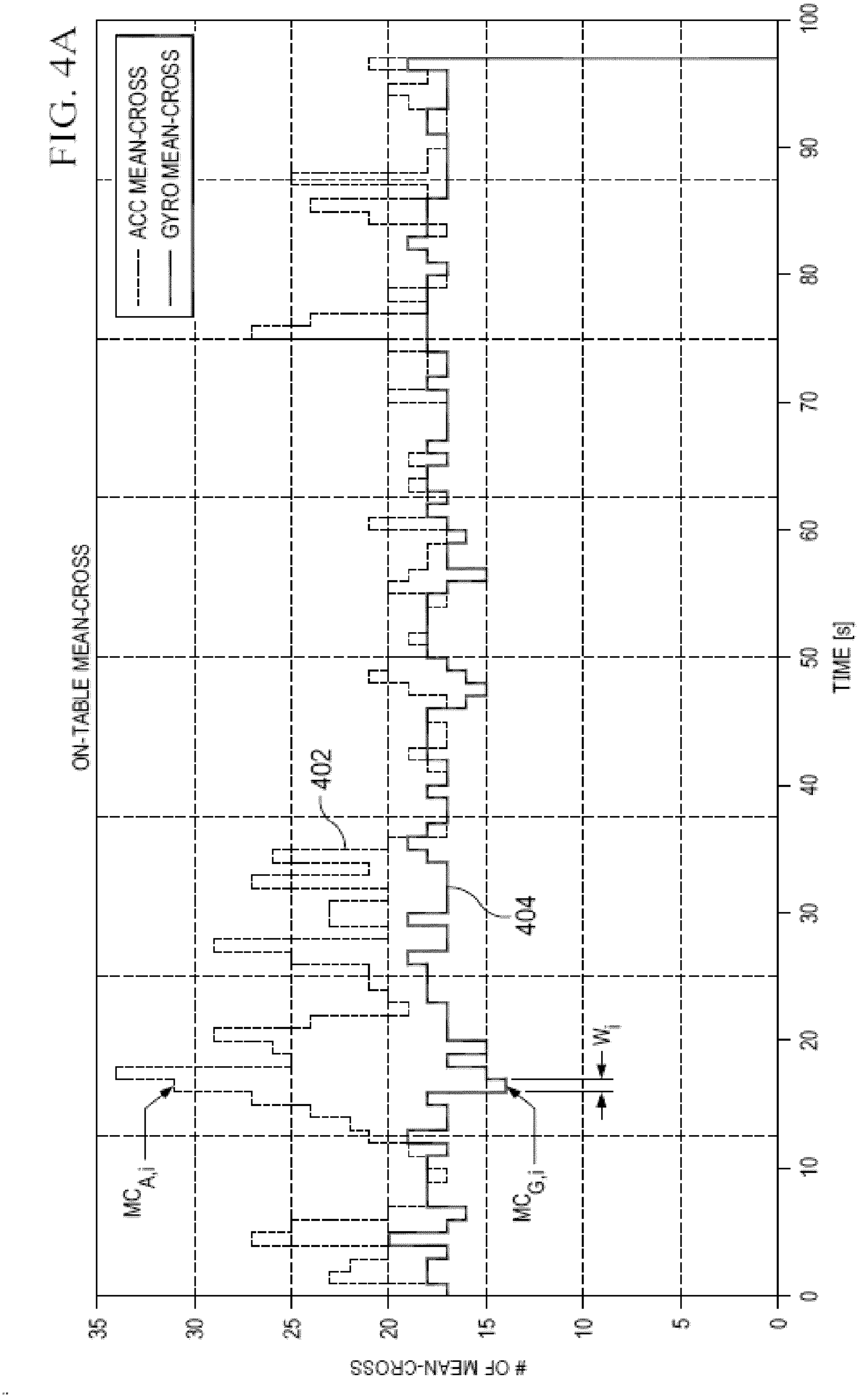

ON-TABLE MEAN-CROSS
ACC MEAN-CROSS
GYRO MEAN-CROSS
402
404
$MC_{A,i}$
$MC_{G,i}$
$W_i$
# OF MEAN-CROSS
TIME [s]
0
5
10
15
20
25
30
35
0
10
20
30
40
50
60
70
80
90
100


FIG. 4A

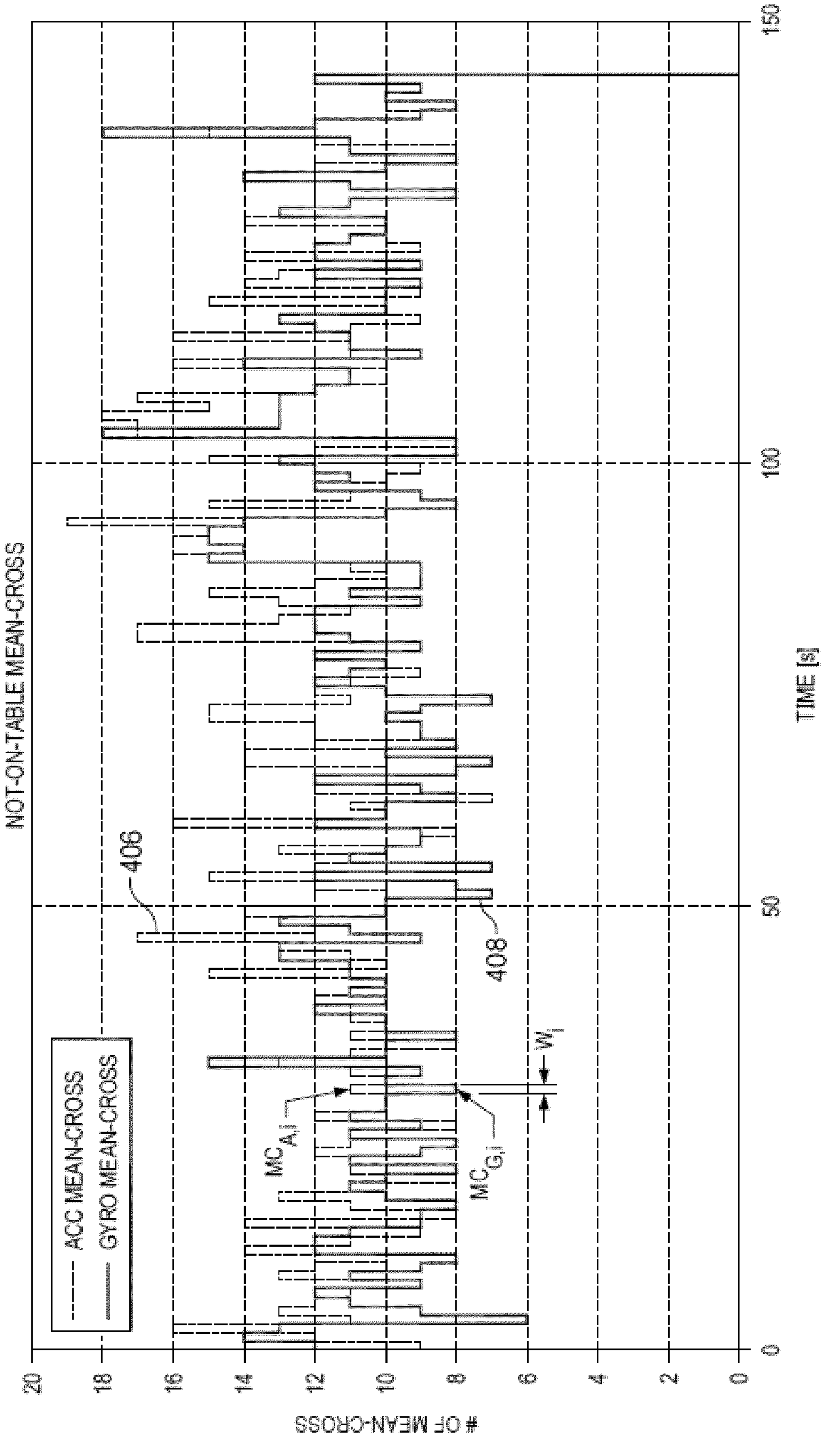
NOT-ON-TABLE MEAN-CROSS
ACC MEAN-CROSS
GYRO MEAN-CROSS
# OF MEAN-CROSS
TIME [s]
406
408
$MC_{A,i}$
$MC_{G,i}$
$W_i$
0
2
4
6
8
10
12
14
16
18
20
0
50
100
150

FIG. 4B

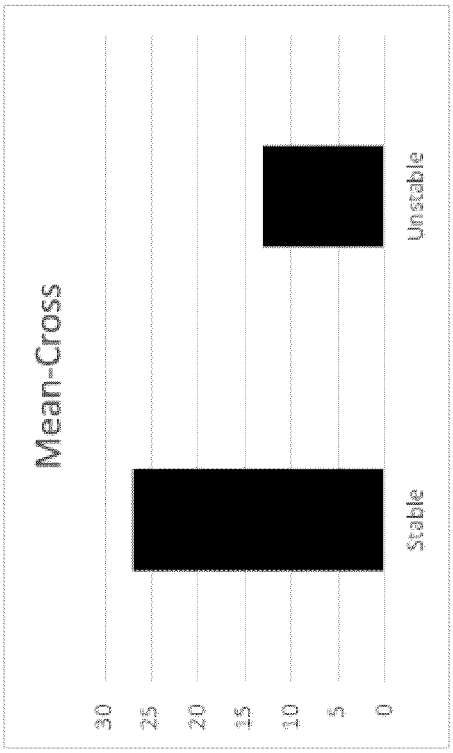
Mean-Cross
30
25
20
15
10
5
0
Stable
Unstable

FIG. 5A

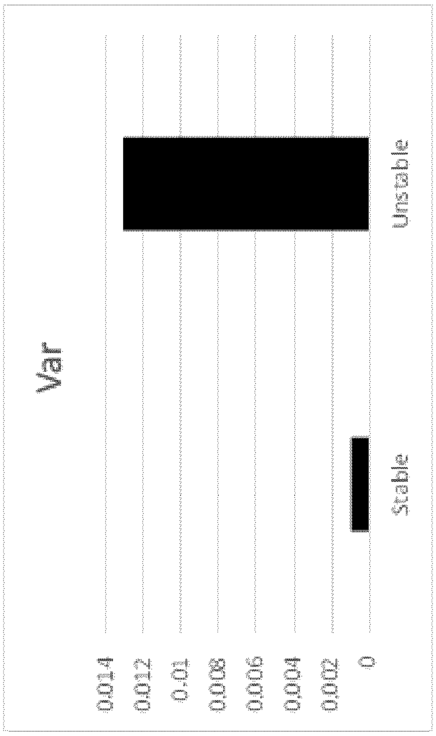
Var
0.014
0.012
0.01
0.008
0.006
0.004
0.002
0
Stable
Unstable

FIG. 5B

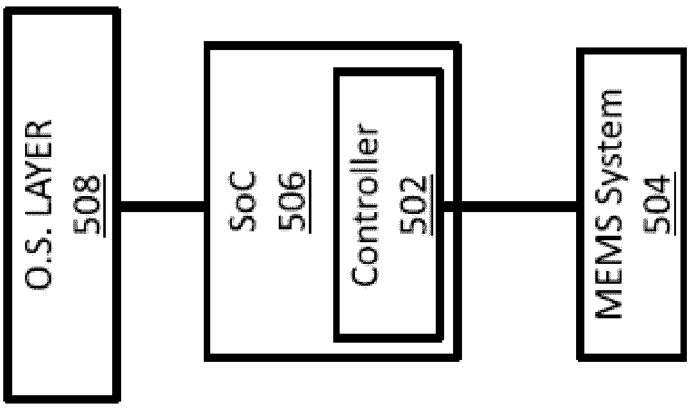


FIG. 6A

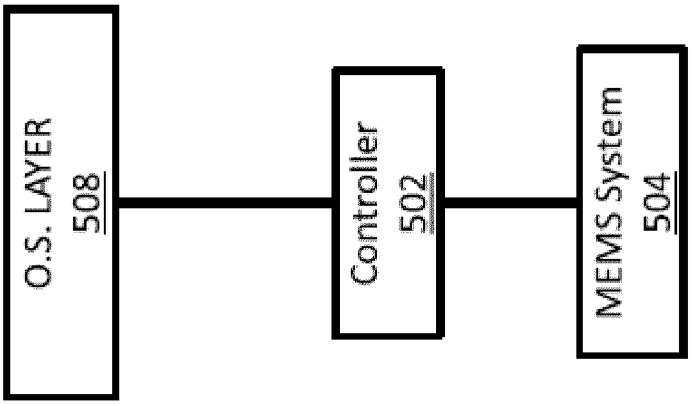


FIG. 6B

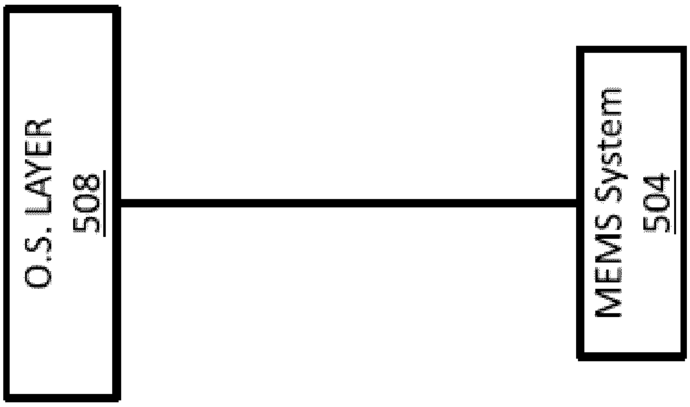


FIG. 6C

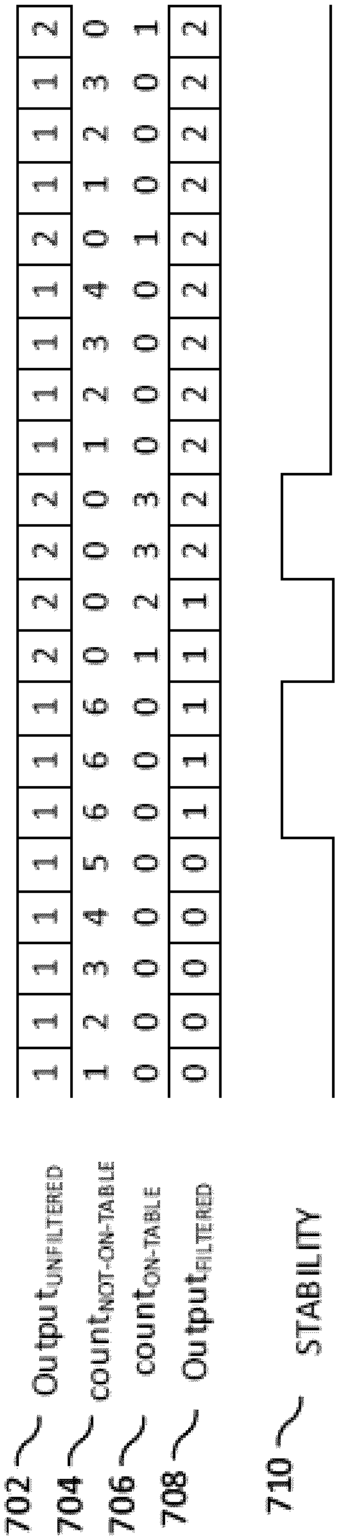
702 Output$_{UNFILTERED}$ 1 1 1 1 1 1 1 1 2 2 2 2 1 1 1 1 2 1 1 1 2
704 count$_{NOT-ON-TABLE}$ 1 2 3 4 5 6 6 6 0 0 0 0 1 2 3 4 0 1 2 3 0
706 count$_{ON-TABLE}$ 0 0 0 0 0 0 0 0 1 2 3 3 0 0 0 0 1 0 0 0 1
708 Output$_{FILTERED}$ 0 0 0 0 0 1 1 1 1 1 2 2 2 2 2 2 2 2 2 2 2
710 STABILITY

*Fig. 7A*

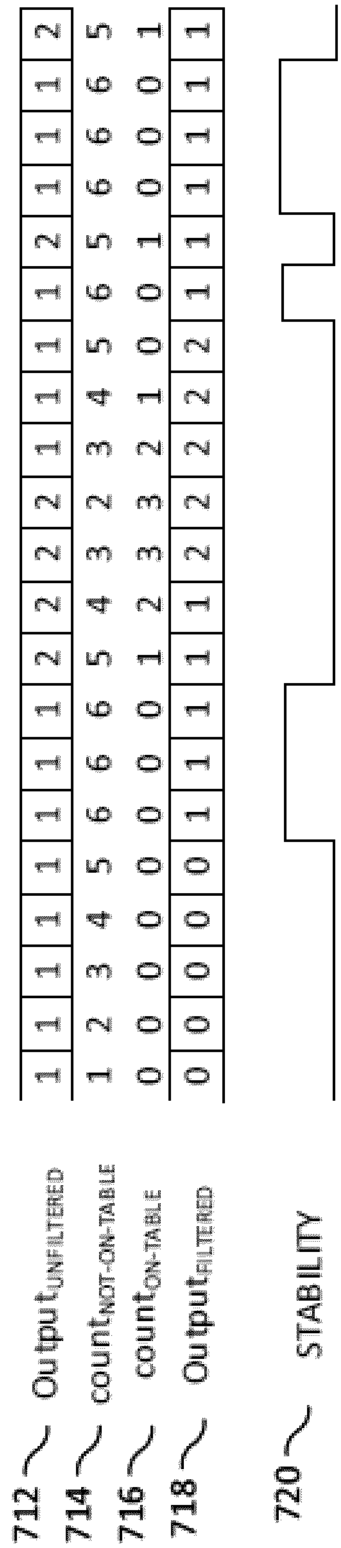
712 Output$_{UNFILTERED}$ 1 1 1 1 1 1 1 1 2 2 2 2 1 1 1 1 2 1 1 1 2
714 count$_{NOT-ON-TABLE}$ 1 2 3 4 5 6 6 6 5 4 3 2 3 4 5 6 5 6 6 6 5
716 count$_{ON-TABLE}$ 0 0 0 0 0 0 0 0 1 2 3 3 2 1 0 0 1 0 0 0 1
718 Output$_{FILTERED}$ 0 0 0 0 0 1 1 1 1 1 2 2 2 2 2 1 1 1 1 1 1
720 STABILITY

*Fig. 7B*

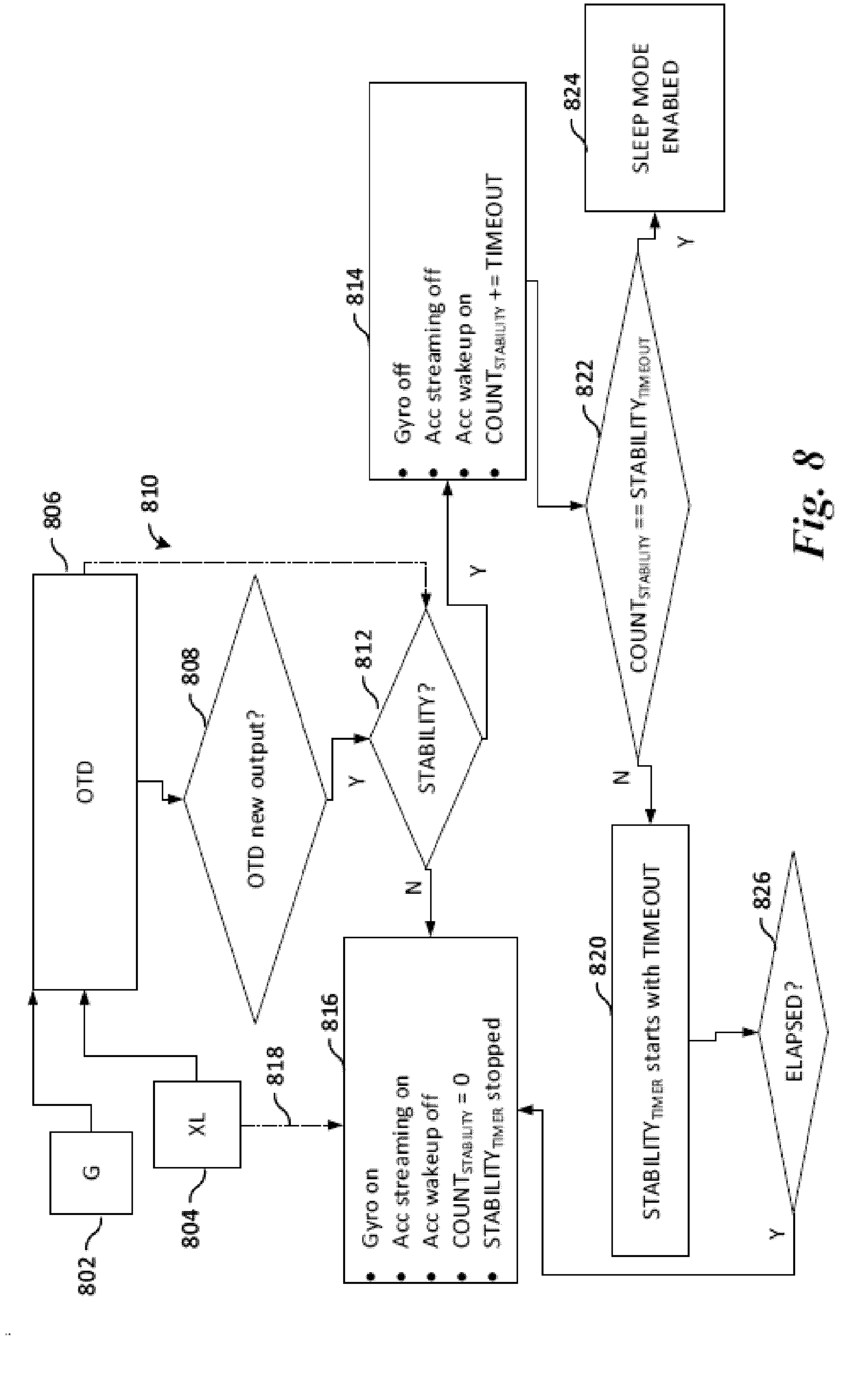
802
G
804
XL
806
OTD
808
OTD new output?
Y
810
812
STABILITY?
Y
N
814
Gyro off
Acc streaming off
Acc wakeup on
COUNT_STABILITY += TIMEOUT
816
Gyro on
Acc streaming on
Acc wakeup off
COUNT_STABILITY = 0
STABILITY_TIMER stopped
818
820
STABILITY_TIMER starts with TIMEOUT
822
COUNT_STABILITY == STABILITY_TIMEOUT
Y
N
824
SLEEP MODE ENABLED
826
ELAPSED?
Y

Fig. 8

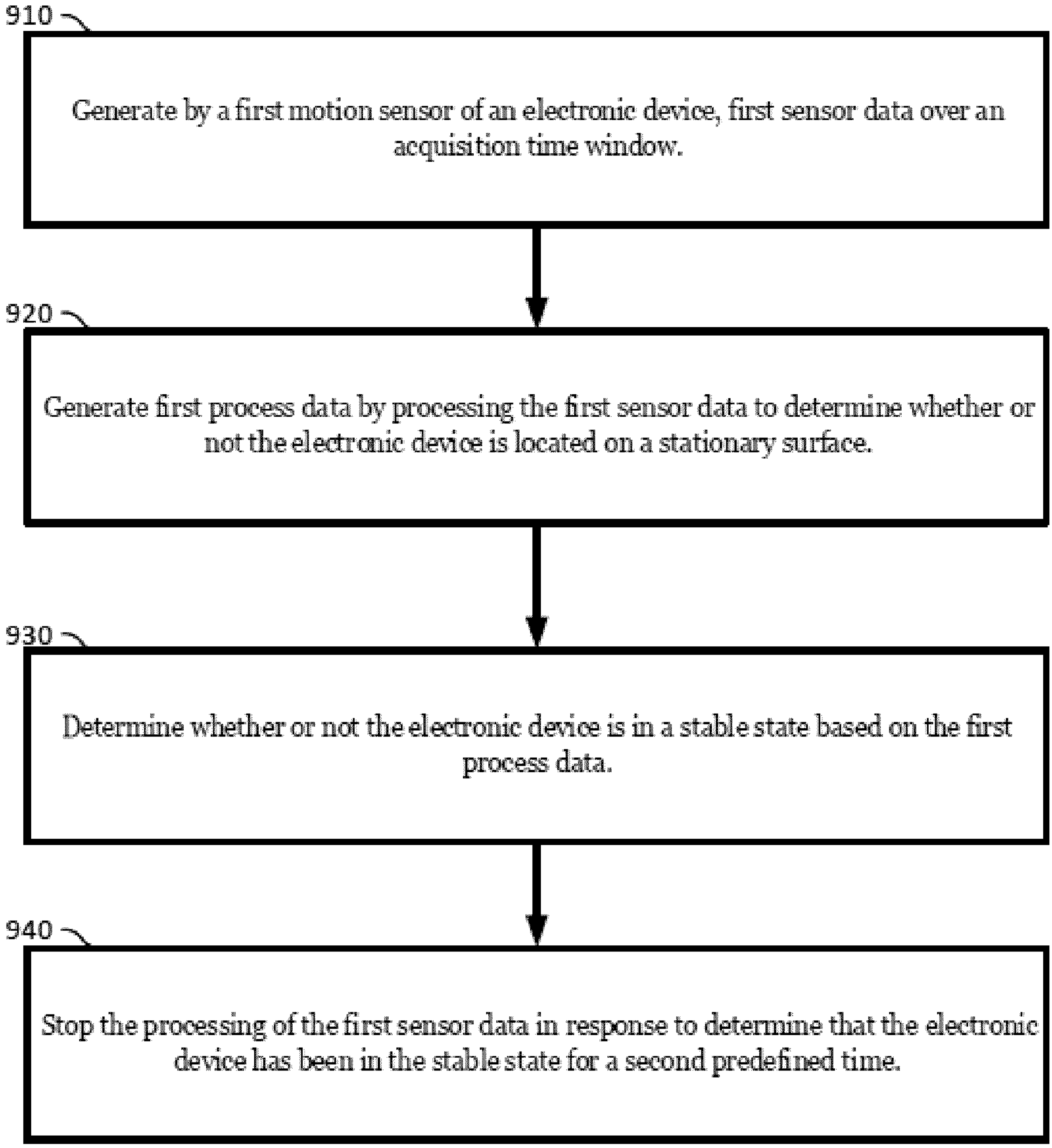
910
Generate by a first motion sensor of an electronic device, first sensor data over an acquisition time window.
920
Generate first process data by processing the first sensor data to determine whether or not the electronic device is located on a stationary surface.
930
Determine whether or not the electronic device is in a stable state based on the first process data.
940
Stop the processing of the first sensor data in response to determine that the electronic device has been in the stable state for a second predefined time.

*Fig. 9*

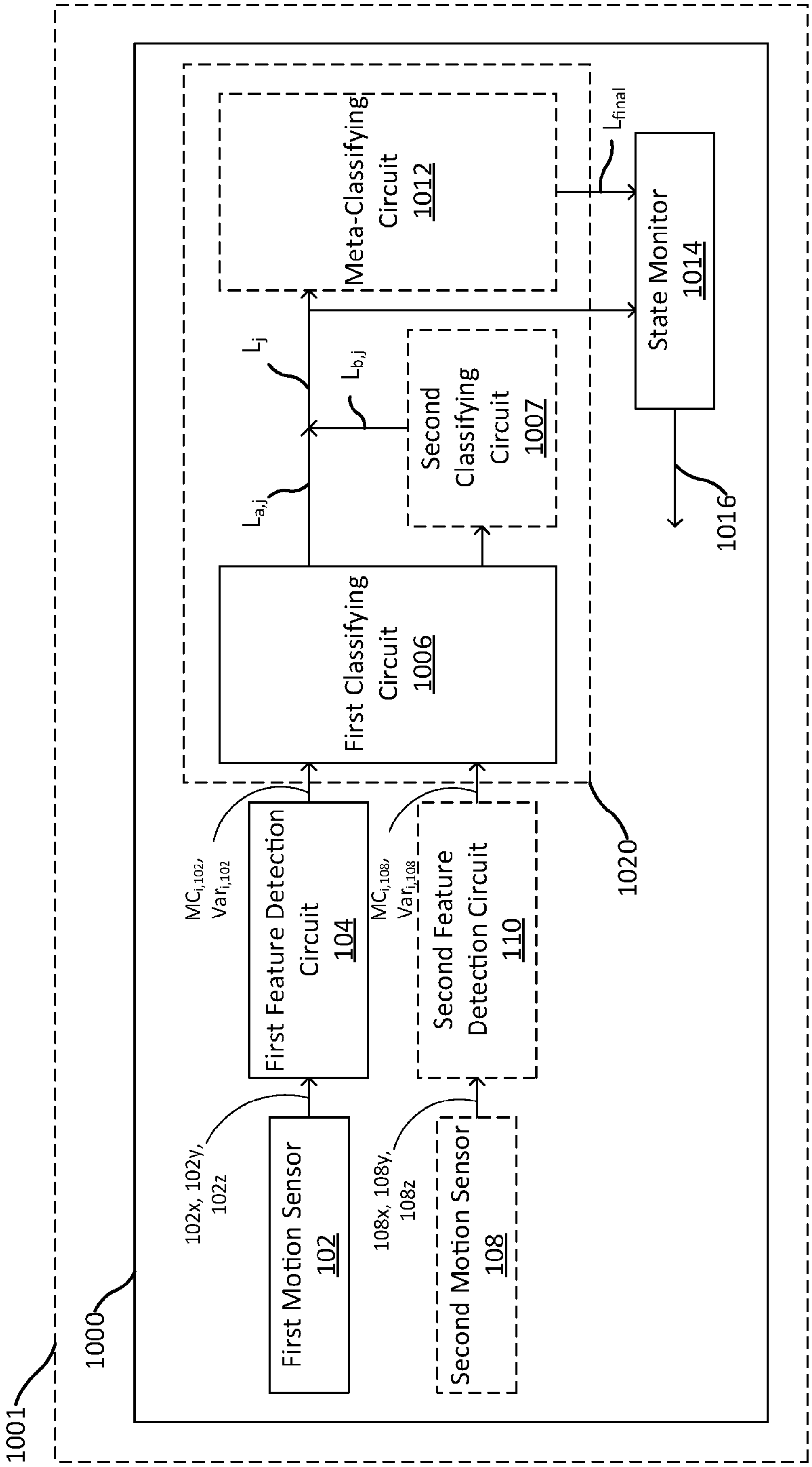
1001
1000
First Motion Sensor 102
102x, 102y, 102z
First Feature Detection Circuit 104
MC_i,102, Var_i,102
Second Motion Sensor 108
108x, 108y, 108z
Second Feature Detection Circuit 110
MC_i,108, Var_i,108
1020
First Classifying Circuit 1006
L_a,j
Second Classifying Circuit 1007
L_b,j
L_j
Meta-Classifying Circuit 1012
L_final
State Monitor 1014
1016

*Fig. 10*

Europäisches Patentamt
European Patent Office
Office européen des brevets

# EUROPEAN SEARCH REPORT

Application Number
EP 24 18 7691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/255686 A1 (RIVOLTA STEFANO PAOLO [IT] ET AL) 19 August 2021 (2021-08-19)<br>* abstract *<br>* figures 1-8 *<br>* paragraphs [0002], [0022] - [0127] * | 1-14 | INV.<br>G06F1/16<br>G06F1/3206<br>G06F1/3287<br>G06F3/01 |
| Y | US 2013/060515 A1 (WEI CHIH-CHUN [TW] ET AL) 7 March 2013 (2013-03-07)<br>* abstract *<br>* figures 1-5 *<br>* paragraphs [0015] - [0042] * | 1-14 | |
| A | EP 3 647 905 A1 (ST MICROELECTRONICS SRL [IT]) 6 May 2020 (2020-05-06)<br>* abstract *<br>* figures 1-6 *<br>* paragraphs [0013] - [0046] * | 1-14 | |
| A | US 2018/039315 A1 (PHAM HUNG A [US] ET AL) 8 February 2018 (2018-02-08)<br>* abstract *<br>* figures 1-7 *<br>* paragraphs [0004] - [0050] * | 1-14 | TECHNICAL FIELDS SEARCHED (IPC)<br>G06F |
| A | US 2023/182748 A1 (WU SHIH HUANG [US] ET AL) 15 June 2023 (2023-06-15)<br>* abstract *<br>* figures 1-6 *<br>* paragraphs [0012] - [0028] * | 1-14 | |

1

The present search report has been drawn up for all claims

| Place of search | Date of completion of the search | Examiner |
|---|---|---|
| The Hague | 22 November 2024 | Visser, Michelle L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 18 7691

This annex lists the patent family members relating to the patent documents cited in the above-mentioned European search report. The members are as contained in the European Patent Office EDP file on
The European Patent Office is in no way liable for these particulars which are merely given for the purpose of information.

22-11-2024

| Patent document cited in search report | Publication date | Patent family member(s) | Publication date |
|---|---|---|---|
| US 2021255686 A1 | 19-08-2021 | NONE | |
| US 2013060515 A1 | 07-03-2013 | CN 102981612 A | 20-03-2013 |
| | | TW 201312386 A | 16-03-2013 |
| | | US 2013060515 A1 | 07-03-2013 |
| EP 3647905 A1 | 06-05-2020 | CN 111198281 A | 26-05-2020 |
| | | CN 210721520 U | 09-06-2020 |
| | | EP 3647905 A1 | 06-05-2020 |
| | | US 2020132717 A1 | 30-04-2020 |
| | | US 2021341512 A1 | 04-11-2021 |
| US 2018039315 A1 | 08-02-2018 | CN 105264456 A | 20-01-2016 |
| | | EP 3005015 A1 | 13-04-2016 |
| | | TW 201508467 A | 01-03-2015 |
| | | US 2014365803 A1 | 11-12-2014 |
| | | US 2018039315 A1 | 08-02-2018 |
| | | WO 2014197174 A1 | 11-12-2014 |
| US 2023182748 A1 | 15-06-2023 | NONE | |

EPO FORM P0459

For more details about this annex : see Official Journal of the European Patent Office, No. 12/82